# EUROPEAN PATENT APPLICATION

(11) **EP 1 721 695 A1**
(43) Date of publication of application: **15.11.2006**
(21) Application number: 05719822.8
(22) Date of filing: 02.03.2005
(51) Int. Cl.: B23K 26/067, B28D 5/00

(54) **LASER PROCESSING EQUIPMENT**

(30) Priority: 05.03.2004 JP 2004062225; 05.03.2004 JP 2004062226
(71) Applicant: Olympus Corporation, Tokyo 151-0072 (JP)
(72) Inventor: MORITA, Terumasa, Hachioji-shi, Tokyo 1920904 (JP); TAKAHASHI, Susumu, Iruma-shi, Saitama 3580021 (JP)
(74) Representative: von Hellfeld, Axel
(86) International application number: PCT/JP2005/003507
(87) International publication number: WO 2005/084874

(57) **Abstract**

A laser machining apparatus, provided with a stage on which a workpiece is placed, an emission device for emitting laser light toward a surface of the workpiece, an optical system for splitting the laser light into a plurality of beams, and for focusing the beams as a plurality of spots on the surface of or within the workpiece, and a movement device for moving the plurality of spots in a horizontal direction relative to the workpiece.

## Description

### TECHNICAL FIELD

This invention relates to a laser machining apparatus used to cut silicon wafers for semiconductor devices and other semiconductor material substrates, liquid crystal panels, plasma displays, and other large-size transparent glass substrates, semiconductor material substrates, piezoelectric material substrates, glass substrates, and similar.

Priority is claimed on Japanese Patent Application Nos. 2004-062225 and 2004-062226, filed March 5, 2004, the content of which is incorporated herein by reference.

### BACKGROUND ART

In the prior art, in order to dice a silicon wafer or other semiconductor substrate into a lattice shape (into chips) to obtain semiconductor chips, a mechanical cutting method employing a dicing machine has commonly been used. In this method, scribe lines are formed in a lattice shape on the surface of the semiconductor substrate, a knife edge or similar is pressed against the rear surface of the semiconductor substrate along the scribe lines, and the semiconductor substrate is cut.

With advances in laser light technology in recent years, devices have begun to be developed which utilize laser light in various fields. For example, in one such application, laser machining apparatuses are known which utilize laser light to cut semiconductor substrates and other workpieces for machining (see for example Patent Document 1).

Such a laser machining apparatus is provided with a mounting table on which a semiconductor substrate which is a workpiece is placed; a θ stage which rotates the mounting table about the Z axis; X, Y, and Z axis stages, which move the mounting table in the X, Y, and Z axis directions respectively; a stage control portion, which controls movement of each of these stages; an Nd:YAG laser or other laser light source, which emits pulsed laser light; a laser light source control portion, which controls the laser light source and adjusts the power, repetition frequency and similar of the pulsed laser light; a dichroic mirror, which reflects the pulsed laser light emitted from the laser light source so that a direction of the optical axis of the pulsed laser light is changed 90° toward the semiconductor substrate; and a focusing lens which focuses the pulsed laser light reflected by the dichroic mirror on the workpiece.

A case of cutting a semiconductor substrate by means of a laser machining apparatus configured in this way is explained.

First, the stage control portion operates each of the stages to move the semiconductor substrate to a prescribed position, such that the focal point of the pulsed laser light is at a position within the semiconductor substrate. Then, the laser light source control portion operates the laser light source such that pulsed laser light is emitted at a prescribed repetition frequency. Pulsed laser light emitted from the laser light source is reflected by the dichroic mirror, is incident on the focusing lens, and is focused in a spot within the semiconductor substrate. By this means, a modified area is formed within the semiconductor substrate.

By using the X and Y axis stages to move the semiconductor substrate in the X and Y directions, a plurality of portions for horizontal cutting and a plurality of portions for vertical cutting are formed within the semiconductor substrate. Thereafter, by pressing a knife edge against the rear surface of the semiconductor substrate, the semiconductor substrate can be cut along the portions for horizontal cutting and the portions for vertical cutting.

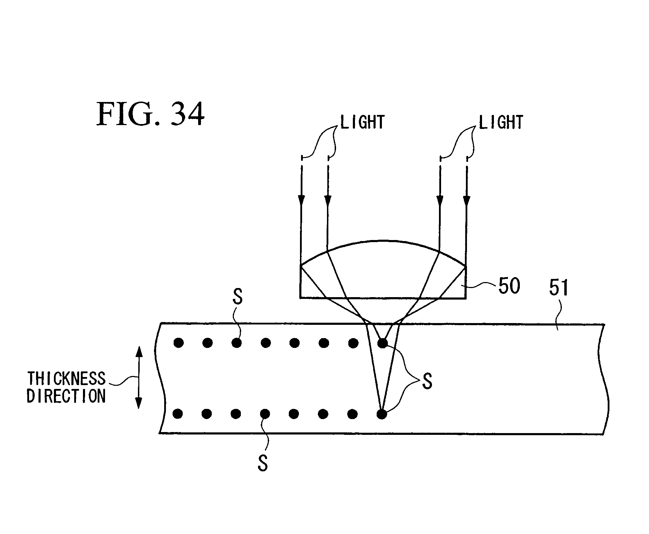

In particular, when a two-point spot lens 50 is used as the focusing lens as shown in FIG. 34, light can be focused simultaneously on two spots S aligned in the thickness direction within the semiconductor substrate 51. That is, by focusing both the rays passing through the center portion of the two-point spot lens S 50 and the rays passing through the peripheral portion of the two-point spot lens 50, light can be focused on two spots in the thickness direction of the semiconductor substrate 51.

By this means, two modified areas can be formed, aligned in the thickness direction, within the semiconductor substrate 51, so that semiconductor substrates 51 with a certain thickness can also be machined.

When utilizing laser light, chipping does not tend to occur after cutting, so that washing and other treatment is unnecessary; in addition, laser light is focused only on areas to be cut to modify the workpiece, so that thermal effects in other areas can be effectively suppressed. Hence methods for cutting workpieces using laser light are attracting attention as new methods to replace the above-described mechanical cutting methods.

On the other hand, laser light is currently used in diverse fields; as one such field, laser machining apparatuses are known which employ laser light to cut semiconductor wafers and other workpieces (see for example Patent Documents 2 through 5).

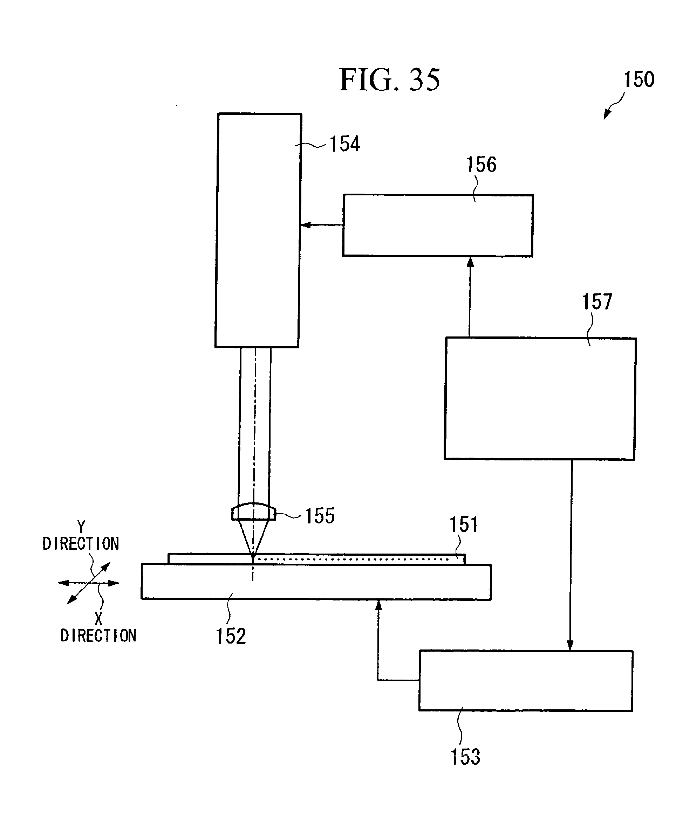

FIG. 35 shows the general configuration of such laser machining apparatuses. The laser machining apparatus 150 shown in FIG. 35 is provided with a stage 152, on the upper surface of which is placed a wafer 151 as the workpiece, and which moves in the X direction and Y direction in the horizontal plane; a stage controller 153, which controls motion of the stage 152 in the X and Y directions; a laser oscillation device 154, which emits intense pulsed laser light in the vertical direction toward the surface of the wafer 151 in extremely short pulses of width 1 µs or less; a focusing optical system 155, provided with a focusing lens and similar which condense the pulsed laser light emitted by the laser oscillation device 154 and focus the laser light on the surface of or in the interior of the wafer 151; a laser oscillation control portion 156, which controls the laser oscillation device 154; and a system control portion 157 which controls the laser oscillation control portion 156 and the stage controller 153 in an integrated manner.

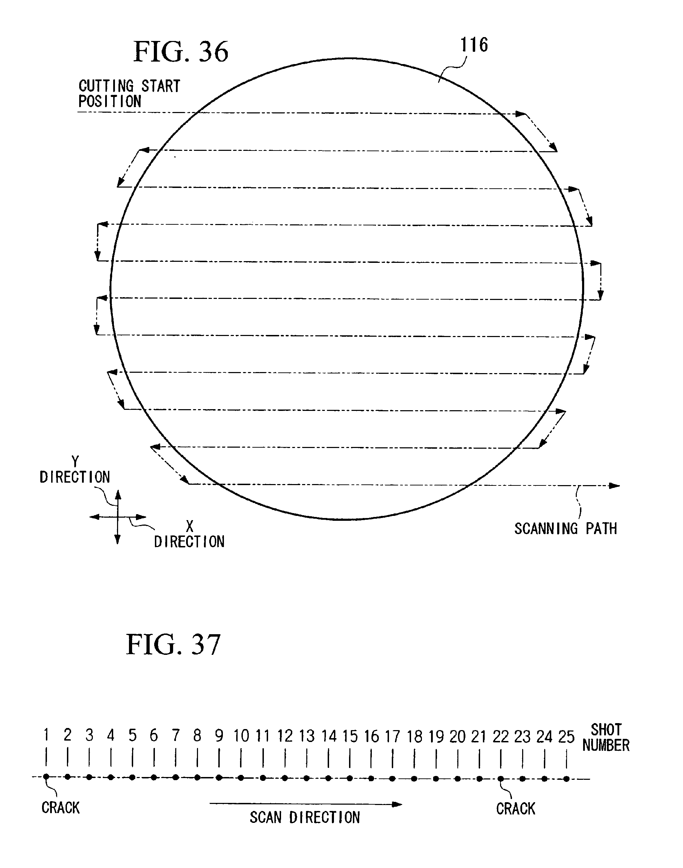

As shown in FIG. 36, an example is considered in which the wafer 151 is formed in a circular shape.

A case is explained in which, by means of a laser machining apparatus 150 configured in this way, a wafer 151 is diced into chip form using laser machining.

First, the stage 152 is moved in the X and Y directions by the stage controller 153, to move the wafer 151 into the cutting start position shown in FIG. 36. The laser oscillation control portion 156 then operates the laser oscillation device 154, causing emission of pulsed laser light. At this time, the oscillation repetition frequency of the pulsed laser light is set to a certain limited frequency. The emitted pulsed laser light is condensed within the wafer 151 and focused on a single point with high energy density by the focusing optical system 155, as shown in FIG. 35. By means of this energy, stress is concentrated at one point within the wafer 151, and a crack occurs in this portion.

Simultaneously with emission of pulsed laser light, the system control portion 157 sends scanning instructions (signals) to the stage controller 153, causing the wafer 151 to be moved via the stage 152. At this time, as shown in FIG. 36, first scanning of the wafer 151 in the X direction is repeated in succession, so that the entire area of the wafer 151 is irradiated with pulsed laser light. That is, the system control portion 157 controls the laser oscillation control portion 156 and stage controller 153 in a unified manner to perform stage scanning, while controlling pulsed laser light oscillation.

By this means, cracks are made to occur continuously at fixed intervals within the wafer 151, similar to a broken line in the X direction, as shown in FIG. 37. This operation is repeated a prescribed number of times, to cause a plurality of such broken lines, creating cracks in the X direction.

After formation of cracks in the X direction is completed, the direction of motion of the stage 152 is changed, the wafer 151 is scanned in succession in the Y direction, and the entire area of the wafer 151 is irradiated with pulsed laser light in a manner similar to that described above. By this means, cracks are formed in a mesh shape in the XY directions, so that by applying an external force, the wafer 151 can be cut into small chips along the cracks.

Here, in order to cut the wafer 151, the cracks formed as if in a broken line must be linked together, and so the intervals between cracks cannot be made larger than a certain specified value. That is, if the interval between cracks is large, it is difficult to link the cracks together, and so it becomes difficult to smoothly cut the wafer 151. Hence a maximum machining interval between cracks has been determined.

The repetition frequency of the pulsed laser light is determined by the performance of the laser oscillation device 154 and also by the limit to this value, and therefore the maximum value of the machining speed, which is determined by the multiplication of this repetition frequency and the maximum machining interval, is also determined. For example, if the oscillation frequency of the pulsed laser light is 20 kpps, and the maximum machining interval is 10 µm, then the maximum machining speed is 10 µm (maximum machining interval) × 20 kpps (oscillation repetition frequency) = 200 mm/sec. This machining speed is a major element determining the throughput of the laser machining apparatus 150.
Patent Document 1: Japanese Unexamined Patent Application, First Publication No. 2003-266185 (FIG. 16 and similar)
Patent Document 2: Japanese Unexamined Patent Application, First Publication No. 2002-205181 (FIG. 1 to FIG. 6 and similar)
Patent Document 3: Japanese Unexamined Patent Application, First Publication No. 2002-205180 (FIG. 1 to FIG. 6 and similar)
Patent Document 4: Japanese Unexamined Patent Application, First Publication No. 2002-192371 (FIG. 1 to FIG. 6 and similar)
Patent Document 5: Japanese Unexamined Patent Application, First Publication No. 2002-192370 (FIG. 1 to FIG. 6 and similar)

However, in the laser machining apparatus shown in FIG. 34, light can be focused simultaneously at the two spots S aligned in the thickness direction of the semiconductor substrate 51, but the rays passing through the center portion of the two-point spot lens 50, and the rays passing through the peripheral portion of the two-point spot lens 50, are each being focused, whereas the rays of the two-point spot lens 50 as a whole cannot be focused, and a large aperture (large NA) cannot be obtained. Hence the spot diameter is broadened and sharpness is reduced, there is a possibly with adverse effects on cutting performance.

Further, it is difficult to focus light on two focal points, that is, on two or more spots, so that application to semiconductor substrates of a certain thickness is difficult.

On the other hand, in the laser machining apparatus of FIG. 35, the repetition frequency of pulsed laser light and the maximum machining interval between cracks are to some extent determined, so that increasing the machining speed is difficult, and raising throughput is therefore difficult.

This invention was devised in light of the above circumstances, and has a first object of providing a laser machining apparatus with cleaner cutting and improved cutting performance, and which can easily cut thicker materials.

A second object is the provision of a laser machining apparatus in which high-speed laser machining can be improved, and throughput enhanced, without altering the laser light repetition frequency or the maximum machining interval between cracks.

### DISCLOSURE OF INVENTION

In order to attain the above objects, this invention provides the following means.

This invention provides a laser machining apparatus, provided with a stage on which a workpiece is placed; an emission device for emitting laser light toward a surface of the workpiece; an optical system for splitting the laser light into a plurality of beams and for focusing the beams as a plurality of spots on the surface of or within the workpiece; and, a movement device for moving the plurality of spots in a horizontal direction relative to the workpiece.

In a laser machining apparatus of this invention, laser light emitted from the emission device is split into a plurality of beams by the optical system, and is focused as a plurality of spots on the surface of or within the workpiece. For example, light on a plurality of spots is focused so as to be arranged in a horizontal direction or in the thickness (depth) direction. And, energy is concentrated at high density at each of the plurality of spots, so that cracks occur. That is, a plurality of cracks are induced simultaneously in a horizontal direction or in the thickness direction.

Further, the movement device causes the plurality of cracks to be moved in a horizontal direction relative to the workpiece, so that a plurality of cracks can be formed continuously in the manner of a broken line, and the cracks can be linked together to enable cutting of the workpiece along the broken line. Further, when the plurality of cracks are aligned in the thickness direction, even when the workpiece is thick, reliable cutting can be easily performed.

In particular, in contrast with conventional methods employing a two-point spot lens, the optical system focuses the light at a plurality of spots after splitting the laser light into a plurality of beams, for example, or first focuses the laser light and then splits the light into a plurality of spots, so that a large aperture (large NA) can be maintained. Hence the spot diameters can be made small, and cleaner cutting is possible. As a result the cutting performance can be improved.

Further, a plurality of cracks can be induced simultaneously each time laser light is emitted, so that even when the plurality of spots are moved rapidly in the spot splitting direction by the movement device, the machining interval between cracks can be kept within the maximum machining interval. Hence high-speed laser machining becomes possible without altering the laser light repetition frequency or the maximum machining interval between cracks, and so throughput can be improved.

In a laser machining apparatus of this invention, it is desirable that the optical system be a focusing optical system having a birefringent optical axis direction beam-splitting element which splits the laser light into a plurality of beams, and which focuses the beams in the plurality of spots, aligned along the direction perpendicular to the surface of the workpiece.

In the laser machining apparatus of this invention, laser light emitted from the emission device is split into a plurality of beams by an optical axis direction beam-splitting element according to the polarization direction, and the focusing optical system focuses the light as a plurality of spots such that the focal positions are aligned in the direction perpendicular to the surface of the workpiece, that is, along the optical axis direction and reaching from the surface to the rear surface. Energy is then concentrated at high density in each of the locations of the plurality of spots, so that cracks are induced at each of the plurality of spots. By this means, a plurality of cracks, aligned in the thickness (depth) direction of the workpiece, can be induced simultaneously.

Because the movement device moves the plurality of spots in a horizontal direction relative to the workpiece, a plurality of cracks aligned in the thickness direction can be formed continuously in a horizontal direction as if forming broken lines. And, the cracks can be linked together to cut the workpiece along the broken lines. At this time, a plurality of cracks are formed in the thickness direction, so that even a thicker workpiece can easily and reliably be cut.

In particular, in contrast with conventional methods employing a two-point spot lens, the focusing optical system focuses the light at a plurality of spots using an objective lens or similar after splitting the laser light into a plurality of beams using an optical axis direction beam-splitting element, for example, or first focuses the laser light using an objective lens or similar and then splits the light into a plurality of spots using an optical axis beam-splitting element, so that a large aperture (large NA) can be maintained. Hence the spot diameters can be made small, and cleaner cutting is possible. As a result the cutting performance can be improved.

In a laser machining apparatus of this invention, it is desirable that the focusing optical system have a birefringent horizontal-direction beam-splitting element which shifts the relative horizontal-direction positions of the plurality of adjacent spots.

In the laser machining apparatus of this invention, a horizontal-direction beam-splitting element is provided, so that among the spots aligned in the thickness direction of the workpiece, the relative horizontal positions of adjacent spots can be shifted. That is, light can be focused with each of the spots divided in the depth (vertical) direction and in a horizontal direction within the workpiece.

Hence the spots can be caused to be linked by a sharp-angled edge such as a knife edge, so that the cleanness of the cutting can be further improved.

In a laser machining apparatus of this invention, it is desirable that an observation optical system be provided for observation of the surface of the workpiece, and that the movement device be capable of moving the plurality of spots relative to the workpiece in the direction perpendicular to the surface, and that during this movement, automatic adjustment of the focus on the surface of the workpiece be performed based on data observed using the observation optical system.

In the laser machining apparatus of this invention, the movement device moves the plurality of spots relative to the workpiece in the direction perpendicular to the workpiece surface and focusing on the surface of the workpiece is adjusted automatically based on data observed using the observation optical system. That is, auto-focusing is performed, so that the surface of the workpiece can always be identified. By this means, the distance between the surface of the workpiece and the focusing optical system can always be maintained at a fixed value.

Hence when using the movement device to move the plurality of spots in a horizontal direction relative to the workpiece, the plurality of spots can be moved while constantly focusing the spots at the same position relative to the surface. Hence higher-precision laser machining is possible. Moreover, laser machining can be performed while observing the surface of the workpiece.

In a laser machining apparatus of this invention, it is desirable that the laser light be pulsed laser light, and that the optical system be provided with a laser beam-splitting element which splits the laser light into a plurality of beams, and a focusing optical system which focuses the plurality of beams as a plurality of spots, aligned in a horizontal direction on the surface of or within the workpiece.

In the laser machining apparatus of this invention, pulsed laser light emitted by the emission device is split into a plurality of beams by the laser beam-splitting element. The split plurality of beams are incident on the focusing optical system, and are then focused as a plurality of spots, aligned in a horizontal direction, on the surface of or within the workpiece. By this means, energy is concentrated at high density at each of the locations of the plurality of spots, so that cracks are induced at the plurality of spots.

The movement device is used to move the plurality of spots in a horizontal direction relative to the workpiece, so that a plurality of cracks can be formed continuously as if in a broken line, and the cracks can be linked together to cut the workpiece along the broken lines.

In particular, a plurality of cracks can be induced simultaneously by the laser beam-splitting element and focusing optical system for each single pulse of pulsed laser light emitted, so that even when the movement device moves the plurality of spots rapidly in the spot splitting direction, for example, the machining interval between cracks can be held to within the maximum machining interval. Hence high-speed laser machining can be performed, and throughput can be improved, without altering repetition frequency of the pulsed laser light or the maximum machining interval between cracks.

In a laser machining apparatus of this invention, it is desirable that the laser beam-splitting element be made to split the laser light so as to expand over a plane, and that the focusing optical system focus the plurality of spots to be aligned in a straight line in a horizontal direction.

In the laser machining apparatus of this invention, pulsed laser light emitted by the emission device is split so as to be expanded over a plane by the beam-splitting element, and then the pulsed laser light is focused by the focusing optical system as a plurality of spots, such as for example n spots, aligned in a straight line in a horizontal direction on the surface of or within the workpiece.

When the n spots are caused to move in the direction of alignment of the spots by the movement device, the machining intervals between cracks can be kept within the maximum machining distance even when the spots are moved n times faster by the movement device, so that the machining time can be shortened, and throughput can be improved.

Further, when n spots are moved by the movement device in a direction substantially perpendicular to the spot alignment direction, a plurality of lines, that is, n lines, can be formed by the spots simultaneously, so that the number of scans can be decreased, and throughput can be improved.

In a laser machining apparatus of this invention, it is desirable that the laser beam-splitting element cause splitting of the laser light so as to expand over planes which are mutually perpendicular, and that the focusing optical system focus the light such that the plurality of spots are aligned in two dimensions with respect to the horizontal plane.

In the laser machining apparatus of this invention, pulsed laser light emitted from the emission device is split by the beam-splitting element so as to be on perpendicular planes, that is, so as to expand over two perpendicular planes, after which the light is focused by the focusing optical system as a plurality of spots, such as for example nxm spots, aligned in two dimensions, for example in the X and Y directions parallel to the horizontal plane, on the surface of or within the workpiece.

Hence the spots can be moved n times (m times) faster by the movement device while keeping the machining interval between cracks within the maximum machining interval, and the number of scans can be reduced by 1/m (1/n) times, so that throughput can be further improved.

In a laser machining apparatus of this invention, it is desirable that rotation device be provided to rotate the plurality of spots about an axis perpendicular to the surface of the workpiece.

In the laser machining apparatus of this invention, the plurality of spots can be rotated about an axis perpendicular to the workpiece surface (the horizontal plane) by rotation device, so that the direction of the plurality of spots can be transformed easily and smoothly. In particular, through combination with the movement device, the relation between the direction of motion and the direction of spot alignment can be associated, so that laser machining can be performed at higher speed, and throughput can be improved.

In a laser machining apparatus of this invention, it is desirable that the laser light be incident on the laser beam-splitting element in a parallel beam state, and that the laser beam-splitting element be an angle-resolving beam-splitting element which splits the laser light into a plurality of beams with different angles to obtain the plurality of beams.

In the laser machining apparatus of this invention, pulsed laser light emitted from the emission device is incident on a diffraction grating or other angle-resolving beam-splitting element in a parallel beam state. By means of the angle-resolving beam-splitting element, the beam is split into a plurality of beams at different angles, after which the beams are incident on the focusing optical system. Thus a single beam can be reliably split into a plurality of beams which are focused on different points of the workpiece, so that a plurality of spots can easily be obtained.

In a laser machining apparatus of this invention, it is desirable that the angle-resolving beam-splitting element be a diffraction grating, and that the splitting plane be positioned at the pupil position of the focusing optical system or at the position which is optically conjugate with the pupil position.

In the laser machining apparatus of the invention, by using a diffraction grating, the beam can be split and a plurality of beams can be made incident on the focusing optical system more precisely. Further, the splitting plane of the diffraction grating is positioned at the pupil position of the focusing optical system or at the position which is optically conjugate with the pupil position, so that the telecentric properties of the rays focused on spots can be secured, and uniformity during laser machining can be maintained.

In a laser machining apparatus of this invention, it is preferable that the angle-resolving beam-splitting element be a Nomarski prism, and that the localization plane be positioned at the pupil position of the focusing optical system or at the position which is optically conjugate with the pupil position.

In the laser machining apparatus of this invention, by using a Nomarski prism, a beam can be split into a plurality of beams according to differences in polarization direction. Further, the localization plane is positioned at the pupil position of the focusing optical system or at the position which is optically conjugate to the pupil position, so that similarly to the above-described diffraction configuration, telecentric properties can be secured. Further, in this method the beam is split according to the polarization direction, and so this method has the characteristic that the power distribution of two beams can easily be made uniform.

In a laser machining apparatus of this invention, it is desirable that the angle-resolving beam-splitting element be configured from a mirror prism.

In the laser machining apparatus of this invention, by using a mirror prism, after splitting the pulsed laser light reliably into a plurality of beams, the beams can be made incident on the focusing optical system.

In a laser machining apparatus of this invention, it is desirable that the laser light be incident on the laser beam-splitting element in the state of a non-parallel beam, and that the laser beam-splitting element be a parallel-displacement beam-splitting element which splits the laser light into a plurality of beams such that there is parallel displacement with respect to the optical axis, resulting in the plurality of beams.

In the laser machining apparatus of this invention, the pulsed laser light emitted from the emission device is incident, in the state of a non-parallel beam, on a birefringent crystal or other parallel-displacement beam-splitting element. By means of the parallel-displacement beam-splitting element, light is refracted according to the polarization direction, after which the light is split into a plurality of beams so as to be parallel-displaced with respect to the optical axis, before being incident on the focusing optical system. In this way, a single beam can be reliably split into a plurality of beams, and a plurality of spots can easily be obtained.

In a laser machining apparatus of this invention, it is preferable that the parallel-displacement beam-splitting element be a birefringent optical element having birefringence.

In the laser machining apparatus of this invention, by using a quartz crystal, calcite crystal or other birefringent optical element, a plurality of beams can be obtained easily and reliably.

In a laser machining apparatus of this invention, it is desirable that the parallel-displacement beam-splitting element be configured from a mirror prism.

In the laser machining apparatus of this invention, by using a mirror prism, light can be split into a plurality of beams easily and reliably, and the beams can be made incident on the focusing optical system.

According to this invention, an optical axis direction-splitting element can be employed to simultaneously induce a plurality of cracks aligned in the thickness (depth) direction of a workpiece, so that even a thicker workpiece can be cut easily and reliably.

In particular, in contrast with methods which use a two-point spot lens, light can be focused on spots while maintaining a large aperture (large NA). Hence spot diameters can be made small for cleaner cutting, and cutting performance can be improved.

Further, each time a pulse of pulsed laser light is emitted, a plurality of cracks can be induced simultaneously by the laser beam-splitting element and the focusing optical system. Hence high-speed laser machining can be performed, and throughput can be improved, without altering the pulsed laser light repetition frequency and the maximum machining interval between cracks.

### BRIEF DESCRIPTION OF THE DRAWINGS

FIG. 1 shows the configuration of a first embodiment of a laser machining apparatus of this invention.
FIG. 2A is a diagram showing an objective lens configuration which splits pulsed laser light into a plurality of beams, and is positioned such that the crystal axis of the birefringent-material lens is perpendicular to the optical axis.
FIG. 2B is a diagram showing an objective lens configuration which splits pulsed laser light into a plurality of beams, and is positioned such that the crystal axis of the birefringent-material lens is parallel to the optical axis.
FIG. 3 shows a state in which two spots are focused so as to be aligned in the thickness direction within a wafer.
FIG. 4A is a diagram showing the configuration of a focusing optical system, with placement such that the crystal axis of a birefringent-material lens is perpendicular to the optical axis.
FIG. 4B is a diagram showing the configuration of a focusing optical system, with placement such that the crystal axis of a birefringent-material lens is parallel to the optical axis.
FIG. 5A shows the configuration of a focusing optical system.
FIG. 5B shows the cross-section along arrow A-A in FIG. 5A.
FIG. 5C shows the cross-section along arrow B-B in FIG. 5A.
FIG. 6 shows a state in which four spots are focused, aligned in the thickness direction within a wafer, by the focusing optical system shown in FIG. 5A.

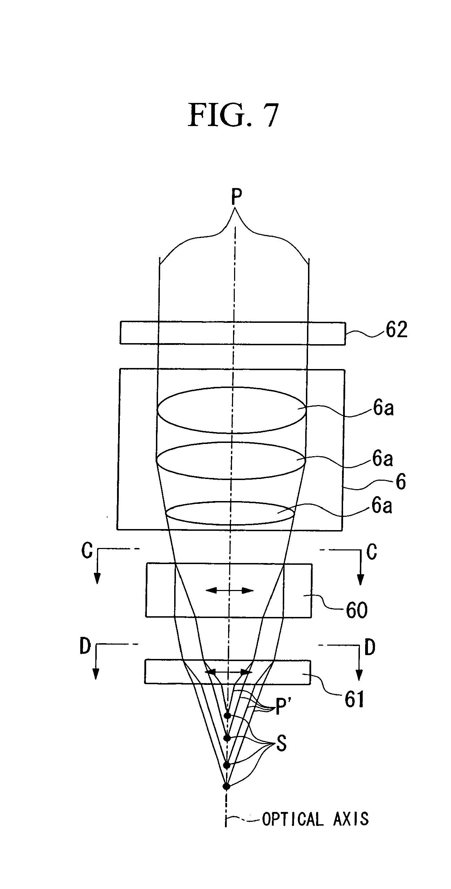

FIG. 7 shows the configuration of a focusing optical system.
FIG. 8A shows the cross-section along arrow C-C in FIG. 7.
FIG. 8B shows the cross-section along arrow D-D in FIG. 7.
FIG. 9A is a diagram showing the configuration of a focusing optical system, with placement such that the crystal axis of a birefringent plate is inclined at an angle of 45° to the optical axis.
FIG. 9B is a diagram showing the configuration of a focusing optical system, with placement such that the crystal axis of a birefringent plate is inclined at an angle of 60° to the optical axis.
FIG. 10 shows a state in which two spots are focused, aligned in the thickness direction within a wafer, by the focusing optical system shown in FIG. 9A.
FIG. 11 shows the configuration of a focusing optical system.
FIG. 12A shows the cross-section along arrow E-E in FIG. 11.
FIG. 12B shows the cross-section along arrow F-F in FIG. 11.
FIG. 13A is a diagram showing the configuration of a focusing optical system, with placement such that the crystal axis of a birefringent plate is perpendicular to the optical axis.
FIG. 13B is a diagram showing the configuration of a focusing optical system, with placement such that the crystal axis of a birefringent plate is inclined at 45° to the optical axis.
FIG. 14A shows the cross-section along arrow G-G in FIG. 13A.
FIG. 14B shows the cross-section along arrow H-H in FIG. 13B.
FIG. 15 shows a state in which four spots are focused within a wafer by the focusing optical systems shown in FIG. 13A and FIG. 13B.
FIG. 16 shows the configuration of a focusing optical system.
FIG. 17 shows the configuration of a second embodiment of a laser machining apparatus of this invention.
FIG. 18 shows the configuration of a laser machining apparatus.
FIG. 19 shows the configuration of a third embodiment of a laser machining apparatus of this invention.
FIG. 20 shows a state in which pulsed laser light is split into a plurality of beams by a diffraction grating, and in addition a focusing lens focuses the light at spots within a wafer.
FIG. 21 A shows a state in which a diffraction grating is positioned such that a plurality of spots are aligned in the X direction of a wafer.

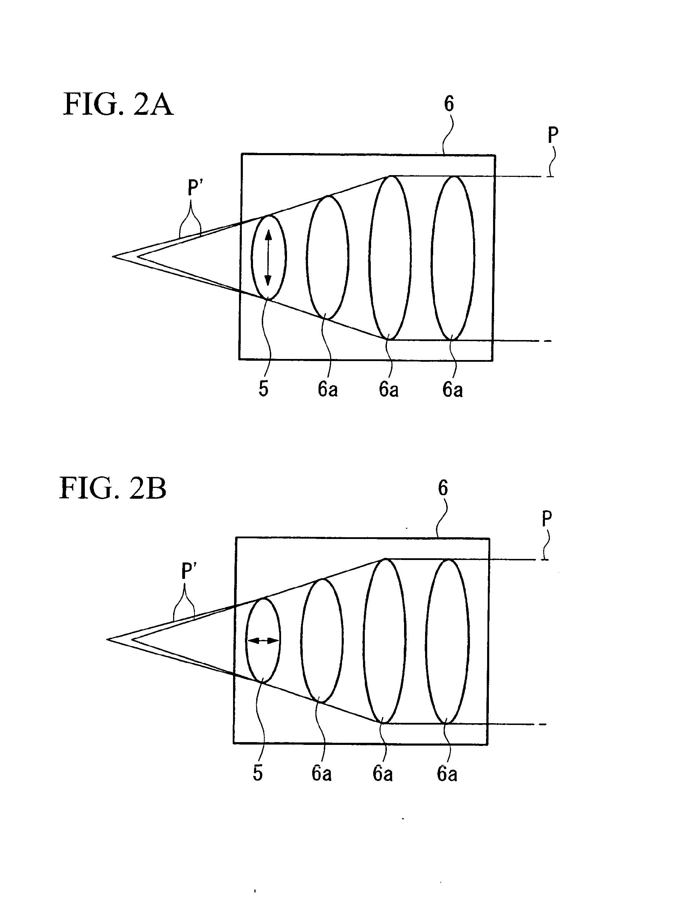

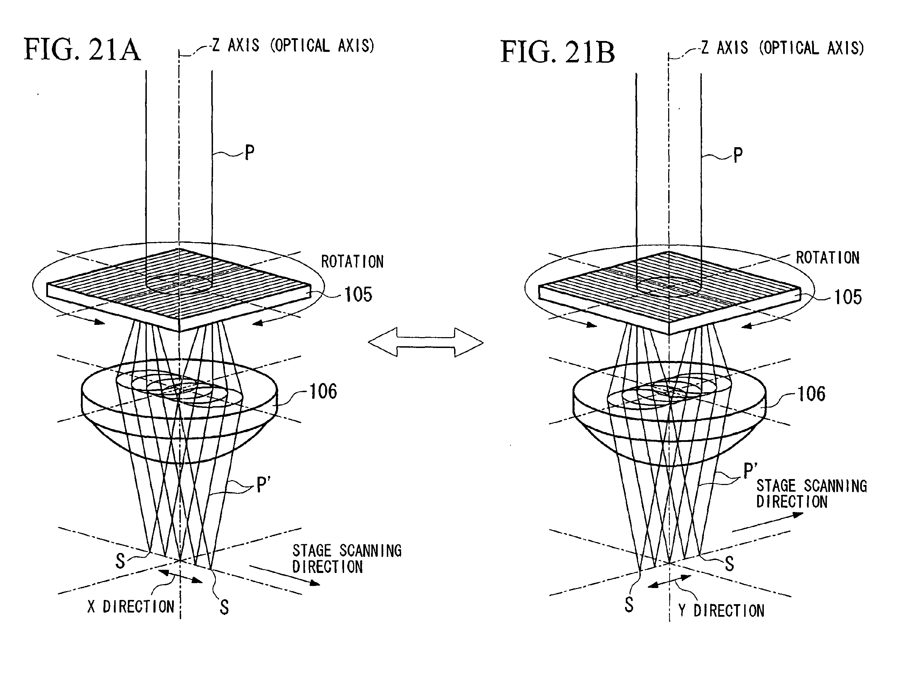

FIG. 2 1 B shows a state in which, starting from the state shown in FIG. 21 A, a rotation mechanism is used to rotate the diffraction grating through 90° about the Z axis, so that the plurality of spots are aligned in the Y direction.

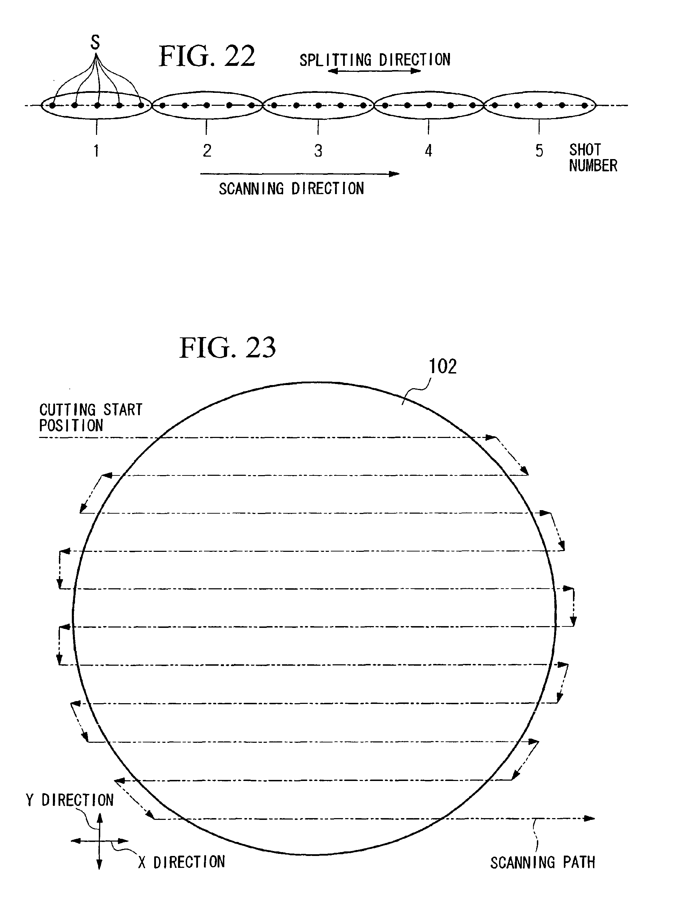

FIG. 22 shows a state in which scanning is performed in the direction of splitting of a plurality of spots.
FIG. 23 is a top view of a wafer, showing the path of scanning of the wafer surface in the X direction.

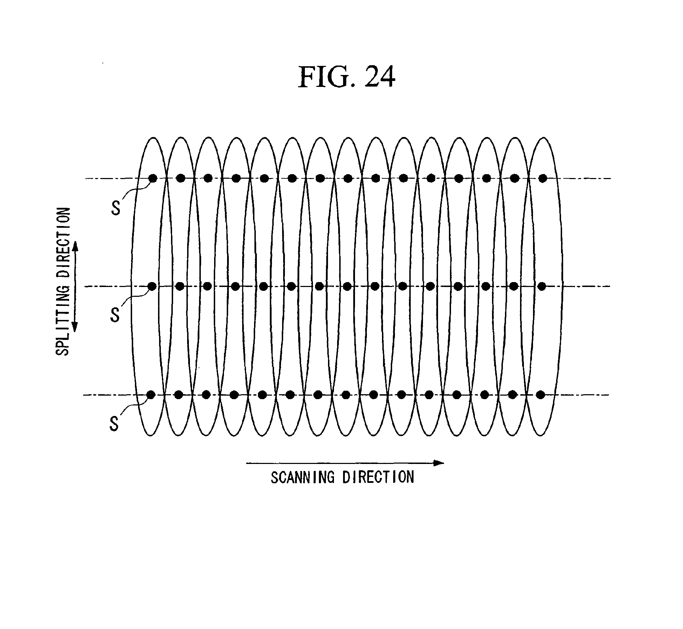

FIG. 24 shows a state in which scanning is performed in the direction perpendicular to the direction of splitting of a plurality of spots.

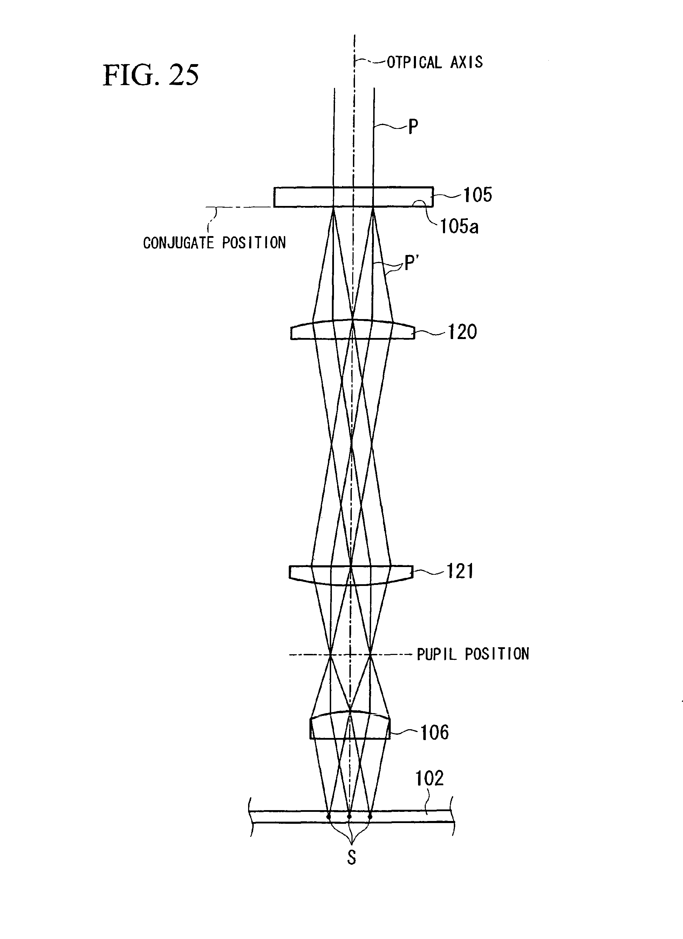

FIG. 25 shows a fourth embodiment of a laser machining apparatus of this invention, and shows a state in which the splitting plane of a diffraction grating is positioned at the position optically conjugate with the pupil position of a focusing lens via a relay lens.

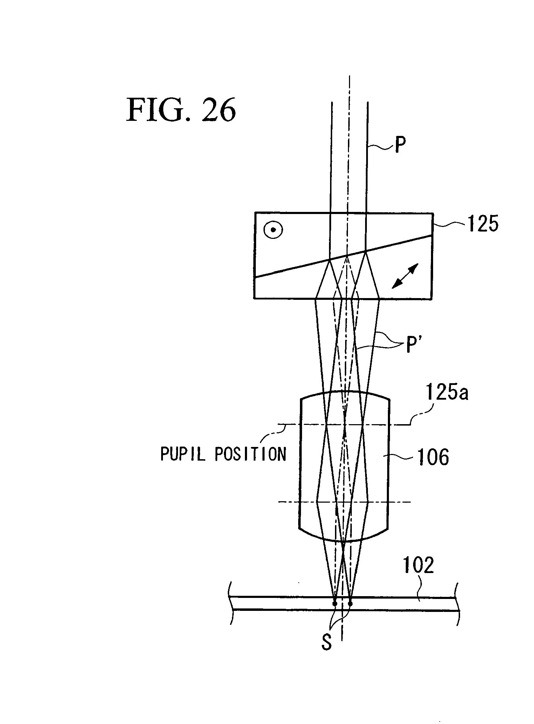

FIG. 26 shows a fifth embodiment of a laser machining apparatus of this invention, and shows a state of splitting pulsed laser light into a plurality of beams by a Nomarski prism.

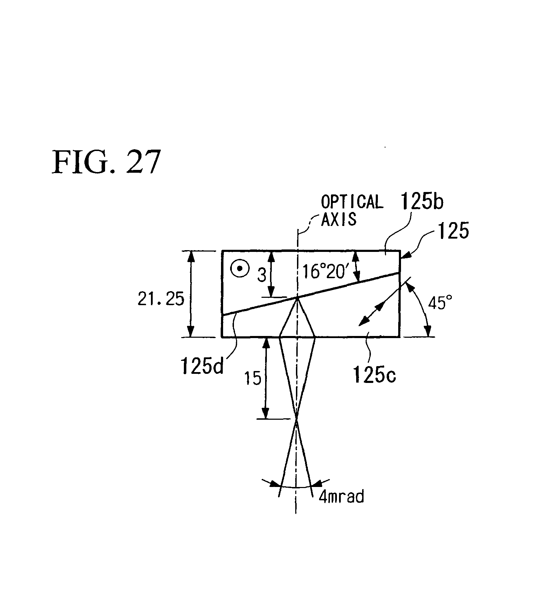

FIG. 27 is a specific design diagram of a Nomarski prism.

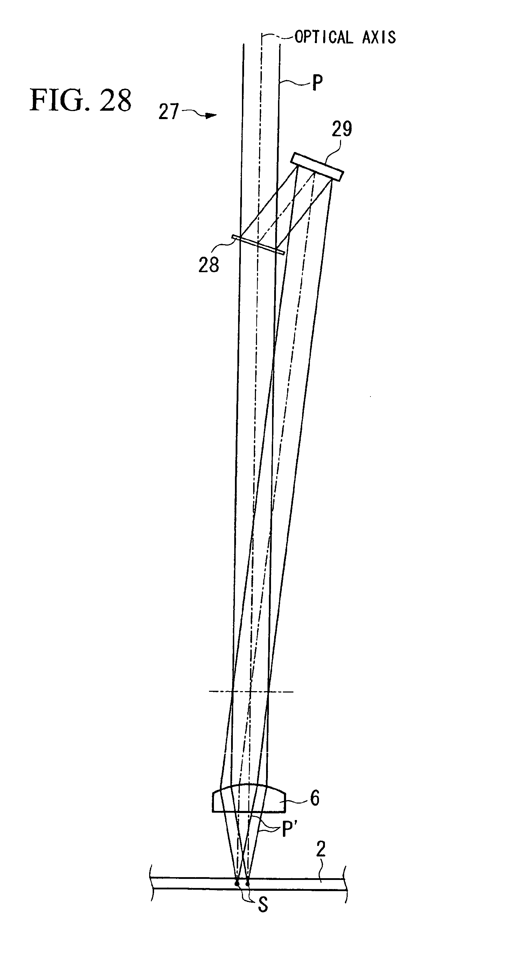

FIG. 28 shows a sixth embodiment of a laser machining apparatus of this invention, and shows a state of splitting pulsed laser light into a plurality of beams by a mirror prism.

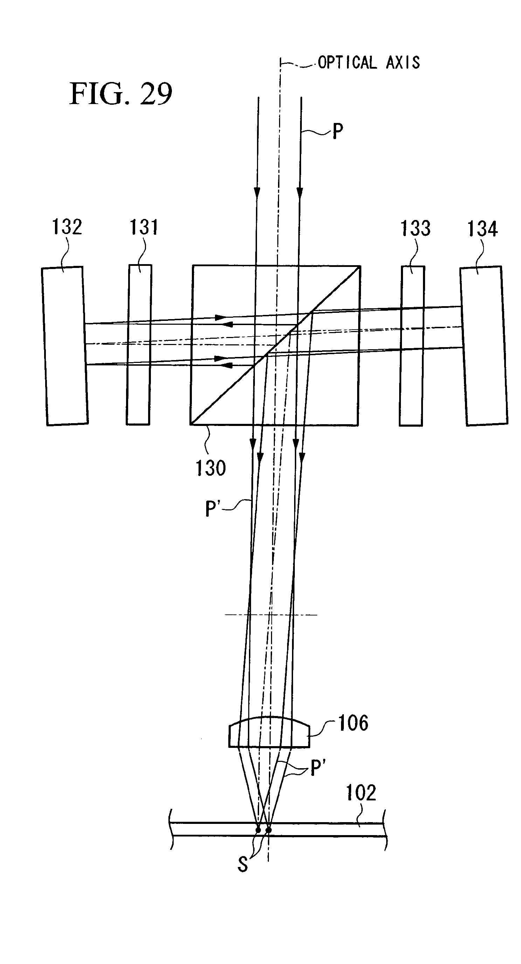

FIG. 29 shows a seventh embodiment of a laser machining apparatus of this invention, and shows a state of splitting pulsed laser light into a plurality of beams by a polarized beam splitter.

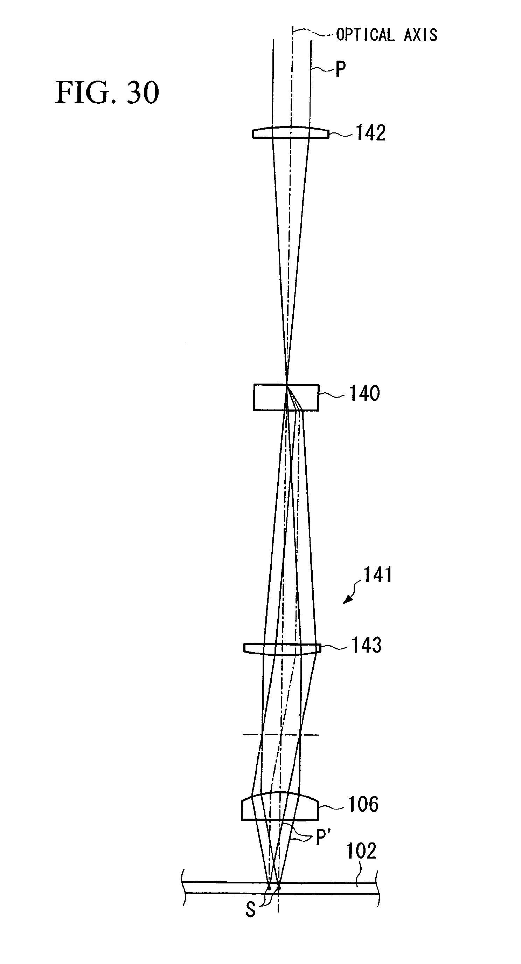

FIG. 30 shows an eighth embodiment of a laser machining apparatus of this invention, and shows a state of splitting pulsed laser light into a plurality of beams by a birefringent crystal.

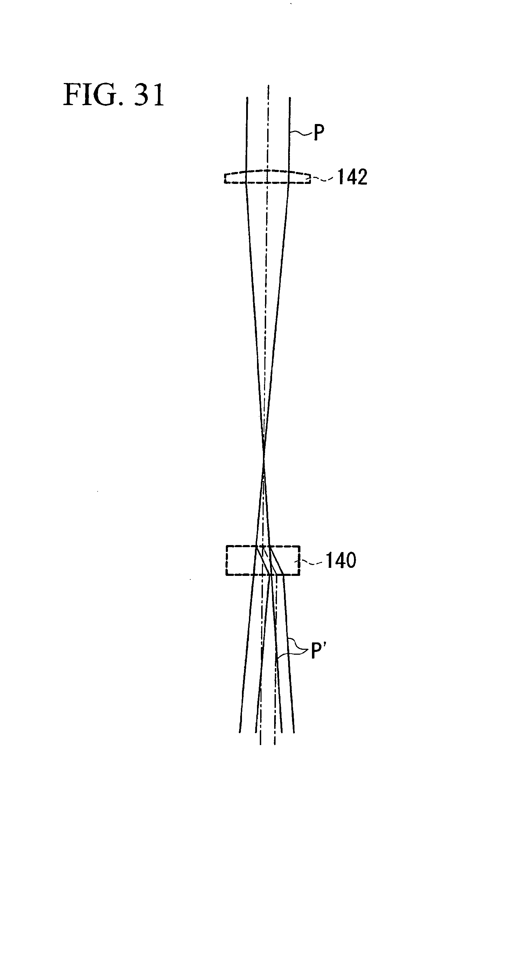

FIG. 31 shows a state in which a birefringent crystal is placed such that there is a shift from the focused positions.

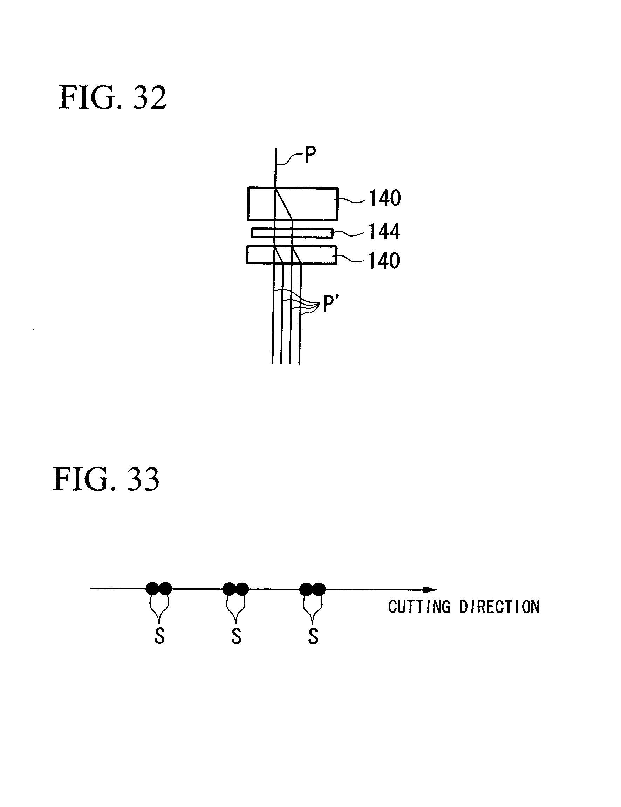

FIG. 32 shows a state in which birefringent crystals are cascade-connected.
FIG. 33 shows a state in which a plurality of spots are brought into proximity and focused on one location.
FIG. 34 is a diagram showing laser machining of the prior art, and shows a state in which a two-point spot lens is used to focus light on two spots, aligned in the thickness direction, within a semiconductor substrate.
FIG. 35 shows the configuration of a laser machining apparatus of the prior art.
FIG. 36 shows a path scanned on a wafer surface in the X direction.
FIG. 37 shows a state of performing laser machining of a wafer.

### BEST MODE FOR CARRYING OUT THE INVENTION

Below, preferred embodiments of the invention are explained, referring to the drawings.

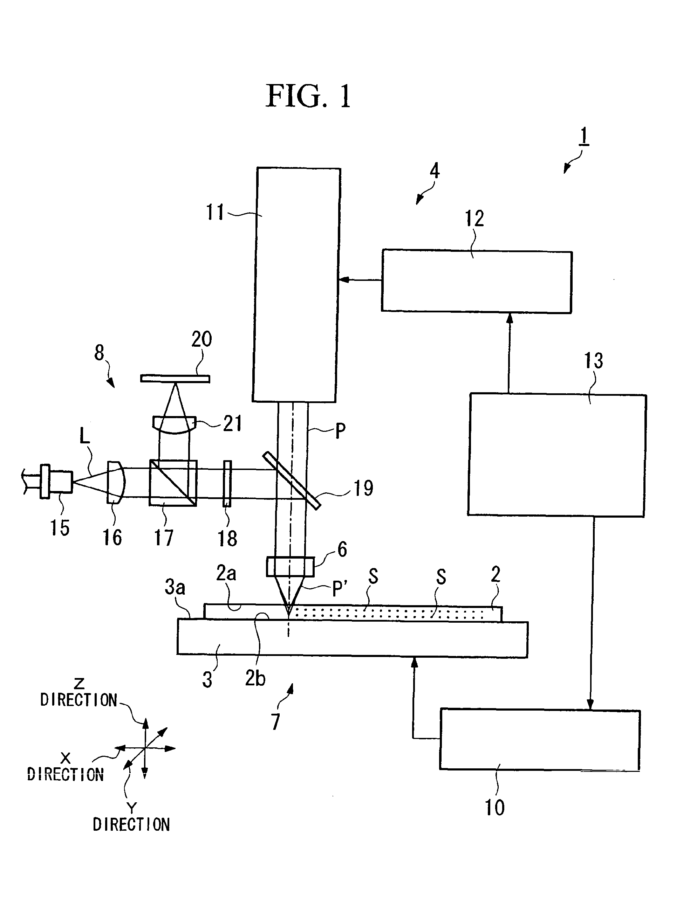

A first embodiment of a laser machining apparatus of the invention is explained, referring to FIG. 1 through FIG. 3. The laser machining apparatus 1 of this embodiment is explained as an apparatus which finely cuts a wafer (the workpiece) 2, formed in a circular shape and of thickness 0.1 mm, for example, into chips by means of laser machining.

As shown in FIG. 1, this laser machining apparatus 1 is provided with a stage 3, onto the mounting surface 3a of which is placed a wafer 2 so as to be parallel to the horizontal plane; emission device 4 for emitting pulsed laser light (laser light) P toward the surface 2a of the wafer 2; an objective lens (optical system, focusing optical system) 6, having a birefringent material lens (optical axis direction splitting element) 5 with birefringent properties, which splits the pulsed laser light P into a plurality of beams P', and which focuses the light as a plurality of spots S with focal positions aligned in the portion from the surface 2a of the wafer 2 to the rear surface 2b within the wafer 2; movement device 7 for moving the plurality of spots S in horizontal directions (XY directions) and in the vertical direction (Z direction), relative to the wafer 2; and, an observation optical system 8 for optically observing the surface 2a of the wafer 2.

The stage 3 is configured to enable movement in X and Y directions parallel to the horizontal plane and in the vertical Z-axis direction. That is, by moving the stage 3, the plurality of spots S can be moved in horizontal directions relative to the wafer 2, as explained above. Movement of this stage 3 in the X, Y and Z directions is controlled by the stage controller 10. That is, the stage 3 and stage controller 10 function as the above-described movement device 7.

An Nd:YAG laser or other laser oscillation device 11 is positioned above the wafer 2 so as to emit pulsed laser light P in the vertical direction to irradiate the surface 2a of the wafer 2. This laser oscillation device 11 has a function for emission of intense pulsed laser light P, with short pulse widths of for example 1 µs or less, at a repetition frequency of 20 kpps. The laser oscillation device 11 can emit pulsed laser light P in a parallel-beam state, and the emission timing and other parameters of the pulsed laser light P are controlled by the laser oscillation control portion 12. That is, the laser oscillation device 11 and laser oscillation control portion 12 function as the above-described emission device 4.

The laser oscillation control portion 12 and the above-described stage controller 10 are controlled in an integrated manner by the system control portion 13.

The objective lens 6 is placed between the laser oscillation device 11 and the wafer 2, and is configured from a plurality of lenses 6a, as shown in FIG. 2A. One of these plurality of lenses 6a is the above-described birefringent-material lens 5. There may be more than one birefringent-material lens 5.

This birefringent-material lens 5 is positioned with the crystal axis in a direction perpendicular to the optical axis (in the direction perpendicular to the plane of the paper). By this means, the objective lens 6 utilizes the difference in refractive index of pulsed laser light due to the polarization direction to split the light into two (a plurality of) beams P', and also as a function for focusing these two beams P' as two spots S, separated and aligned in the direction perpendicular to the surface 2a of the wafer 2, that is, along the thickness direction (depth direction) of the wafer 2.

As indicated in FIG. 1, the observation optical system 8 has a light source 15 which emits linearly-polarized semiconductor laser light L; a first lens 16, which renders the semiconductor laser light L emitted from the light source 15 into a parallel beam; a polarized beam splitter 17, positioned adjacent to the first lens 16; a quarter-wavelength plate 18, which rotates the direction of polarization of the semiconductor laser light L which has passed through the polarized beam splitter 17 by 90° over one round trip of the optical path; a dichroic mirror 19, which causes the semiconductor laser light L which has passed through the quarter-wavelength plate 18 to be reflected so that the optical axis direction is changed by 90° and the light is incident on the objective lens 6; and a second lens 21, which focuses on a photodiode 20 the light reflected by the polarized beam splitter 17, among the light returning from the objective lens 6.

The dichroic mirror 19 reflects semiconductor laser light L, and transmits light of other wavelengths, such as for example pulsed laser light P emitted by the laser oscillation device 11.

The polarized beam splitter 17 functions to transmit, for example, P component linearly polarized light which has oscillating component parallel to the plane of incidence, among the linearly polarized light, and to reflect the S component, with oscillating component perpendicular to the plane of incidence.

The system control portion 13 executes feedback control of the stage controller 10, based on image pick up data received by the photodiode 20, to move the stage 3 in the Z-axis direction. That is, auto-focusing is performed. By this means, adjustment is performed such that the semiconductor laser light L is always focused on the surface 2a of the wafer 2.

Below, a case is explained in which a laser machining apparatus 1 configured as described above is used to dice a wafer 2 into chips.

First, the stage controller 10 is used to move the stage 3 in the X and Y directions, to move the wafer 2 to the cutting start position. After moving to the cutting start position, the laser oscillation control portion 12 operates the laser oscillation device 11, to cause emission of pulsed laser light P in the form of a parallel beam. The emitted pulsed laser light P passes through the dichroic mirror 19 before being incident on the objective lens 6.

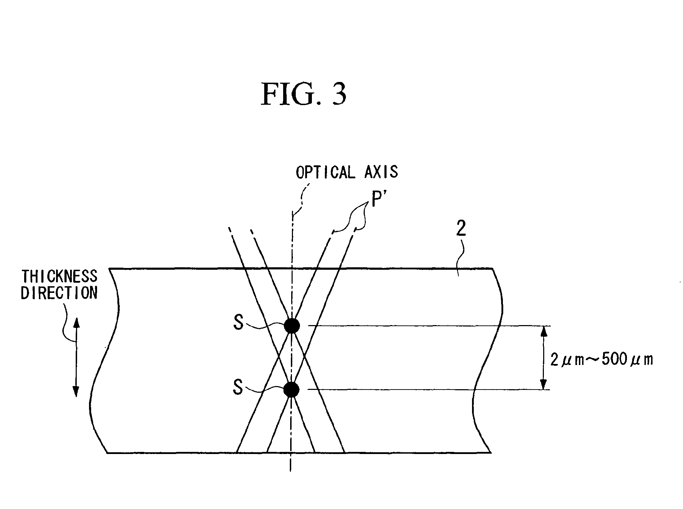

Pulsed laser light P incident on the objective lens 6 is refracted by the birefringent-material lens 5 according to the direction of polarization and split into two beams P' (split into a beam with polarization component in the same direction as the crystal axis, and a beam with polarization component perpendicular thereto), and is also focused as two spots S, aligned in focal positions along the direction perpendicular to the surface 2a of the wafer 2 (the optical axis direction) in the portion from the surface 2a of the wafer 2 to the rear surface 2b. For example, as shown in FIG. 3, the light is focused as two spots along the optical axis direction within the wafer 2, with, for example, a distance of from 2 µm to 500 µm therebetween.

The spot interval is not limited to the range 2 µm to 500 µm. However, it is preferable that the interval be between 2 µm and 50 µm.

Energy is then concentrated at high density at each of the spots S, and cracks occur. Thus each time one pulse of the pulsed laser light P is emitted, two cracks, upper and lower, are induced simultaneously, aligned along the optical axis (thickness direction) within the wafer 2. By means of these two cracks, stress concentration occurs in the depth direction (thickness direction) in the wafer 2.

Simultaneously with the above-described emission of pulsed laser light P, the system control portion 13 sends a signal to the stage controller 10 to move the wafer 2 in the X direction via the stage 3. By this means, the two upper and lower spots S are created continuously in the X direction, as if forming a broken line.

The above-described X-direction scanning is repeated in order, to cause cracks along the X direction across the entire area of the wafer 2. That is, a state results in which a plurality of such broken lines in the X direction are formed. The intervals between cracks are for example 10 µm; this value is set such that the maximum machining interval necessary to link adjacent cracks together is maintained.

After the end of laser machining in the X direction, the stage controller 10 is used to move the wafer 2, via the stage 3, in the Y direction, and scanning in the Y direction is repeated in order, similarly to the scanning described above, to perform laser machining in the Y direction over the entire area of the wafer 2.

When the above-described scanning in the X and Y directions is completed, a state results in which cracks are formed continuously in the X and Y directions as in the shape of a mesh, with the maximum machining interval maintained within the wafer 2. By this means, the cracks are linked along the broken lines in a lattice shape. Hence the wafer 2 can be diced into chip shapes. Further, two cracks are formed simultaneously in the depth direction of the wafer 2, and stress is concentrated in the depth direction, so that even when the wafer 2 is thick, cutting can be performed easily and reliably.

In particular, in contrast with use of a conventional two-point spot lens, spots S can be focused using the entire objective lens 6, so that a large NA can be obtained. Hence the spot diameters can be made small, beams P' can be focused at smaller points, and cleaner cutting becomes possible. The wafer 2 can therefore be cut more smoothly, and cutting performance can be enhanced. Moreover, the entire objective lens 6 is used when focusing on each spot S, so that the intensity at each spot S can be made the same, and unevenness in machining can be eliminated to the extent possible.

Further, when performing the above-described laser machining, the light source 15 emits linearly polarized semiconductor laser light L. The emitted semiconductor laser light L is rendered into a parallel beam by the first lens 16, and then is incident on the polarized beam splitter 17. The light becomes P-component linearly polarized light, the oscillating component of which is parallel to the plane of incidence, and the light is then incident on the quarter-wavelength plate 18. The incident light passes through the quarter-wavelength plate 18 to become circularly polarized light, after which the light is reflected by the dichroic mirror 19 and is incident on the objective lens 6. The light incident on the objective lens 6 then irradiates the surface 2a of the wafer 2.

Light reflected by the surface 2a of the wafer 2 is focused by the objective lens 6, is then reflected by the dichroic mirror 19 and is incident on the quarter-wavelength plate 18, to become S-component polarized light, the oscillating component of which is perpendicular to the incidence plane. This light is reflected by the polarized beam splitter 17, and then forms an image on the photodiode 20 by means of the second lens 21. The data of the formed image is sent to the system control portion 13. Based on the data thus sent, the system control portion 13 controls the stage controller 10 to move the stage 3 in the Z direction, such that the focal point of the semiconductor laser light L coincides with the surface 2a of the wafer 2. That is, auto-focusing is performed automatically, so that an image of the surface 2a of the wafer 2 is always picked up.

By this means, the distance between the objective lens 6 and the surface 2a of the wafer 2 can always be maintained at a constant distance during scanning. Hence scanning can be performed while focusing the plurality of spots S at the same positions from the surface 2a, so that more precise laser machining can be performed. Further, laser machining can also be performed while confirming the position of the surface 2a of the wafer 2.

As described above, in the laser machining apparatus 1 of this embodiment, a plurality of cracks aligned in the thickness (depth) direction of the wafer 2 can be induced simultaneously by means of the birefringent-material lens 5. Hence even a wafer 2 which is thick can be cut easily and reliably.

In particular, the NA can be made large, so that beams P' can be focused at a smaller point. Hence spot diameter can be reduced, for cleaner cutting, and the wafer 2 can be cut more smoothly.

In the above first embodiment, a configuration was employed in which the crystal axis of the birefringent-material lens 5 was positioned in a direction perpendicular to the optical axis; but other configurations may be employed, and in a more preferable configuration, the crystal axis may be provided parallel to the optical axis, as shown in FIG. 2B.

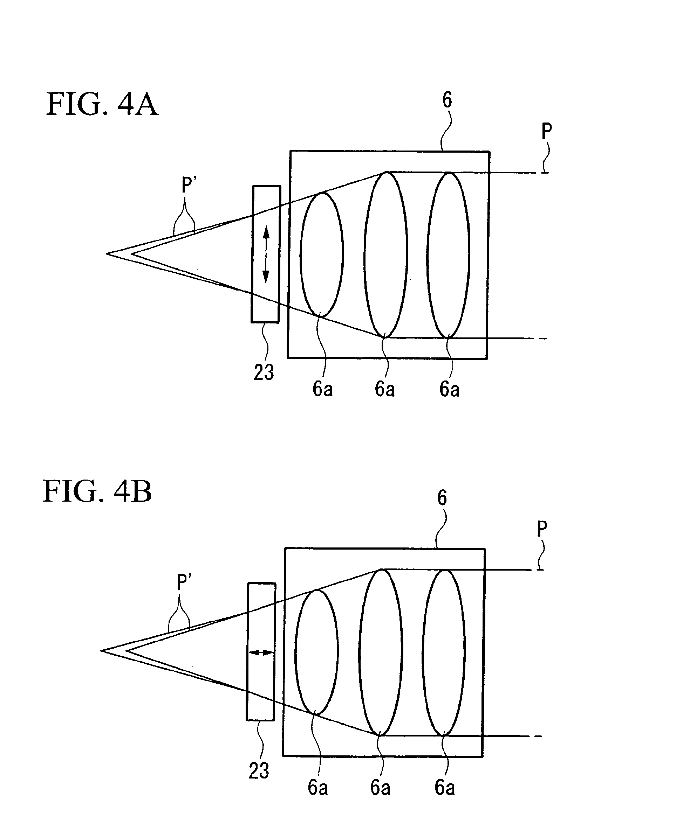

In the above first embodiment, an objective lens assembly 6 was adopted as the focusing optical system, with a birefringent-material lens 5 as one of the plurality of lenses 6a; but other configurations are possible. For example, as shown in FIG. 4A, a focusing optical system may be adopted in which a birefringent plate (optical axis-direction splitting element) 23 with birefringent properties is inserted at the tip of the objective lens 6. As the birefringent plate 23, for example, a plate having a crystal axis in a direction perpendicular to the optical axis (the direction perpendicular to the plane of the paper) may be used. In this case, light may be made incident on the birefringent plate 23 in the state of a non-parallel beam. As the material of the birefringent plate, for example, α-BBO, quartz, calcite, LiNBO₃, YVO₄, and similar can be used.

A configuration may also be employed in which the crystal axis of the birefringent plate 23 is parallel to the optical axis, as shown in FIG. 4B.

Because the beam emitted from the objective lens 6 is at a certain angle with the optical axis (having angles for NAs of 0.2 to 0.8 or similar), there is separation of the portion with polarization in the plane containing the optical axis and the polarization component perpendicular thereto. Both polarization components advance with the optical axis shifted laterally to be condensed at two focal points. However, when linearly polarized light is incident, the proportion of separation of the two polarization components in the pupil plane differs with the pupil position, and so a deformed circular shape results. Hence in order to render uniform the quantities of light at the two points, the light should be made incident as circularly polarized light. In this case also, by combining birefringent materials having an optical axis in the same direction as the optical axis of the birefringent plate 23, and placing a depolarizing plate therebetween, separation into a greater number of points is possible.

A configuration in which a birefringent plate 23 is inserted at the tip of the objective lens 6 is shown in FIG. 4, but other configurations may be employed, and a focusing optical system in which the birefringent plate is inserted before the objective lens 6 may be used. For example, a portion of the focusing optical system for pulsed laser light P incident on the objective lens 6 may be a birefringent plate, configured such that the effective light source position differs according to the polarization direction. By this means, a plurality of spots which is aligned along the thickness direction within the wafer 2 can be focused. In this case also, similarly to that described above, the pulsed laser light P may be made incident as a non-parallel beam.

In the above first embodiment, the pulsed laser light P is split into two beams P', and the beams are focused as two spots, upper and lower, along the optical axis direction; but the number of spots S is not limited to two.

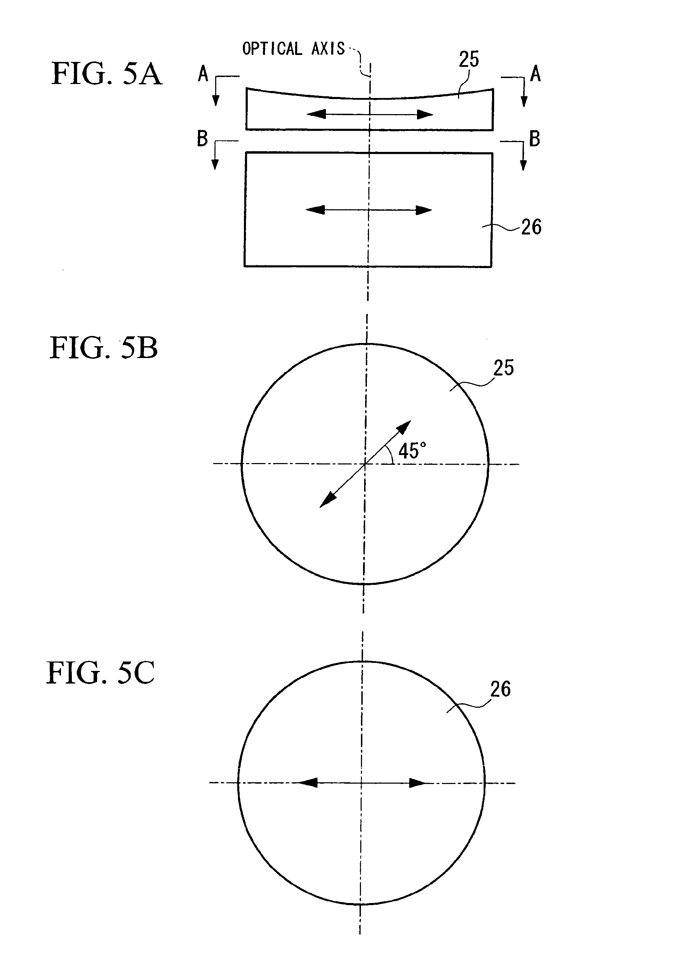

For example, the objective lens 6, a concave lens with birefringence (optical axis-direction splitting element) 25 placed before the objective lens 6 shown in FIG. 5, and a birefringent plate (optical axis-direction splitting element) 26 may be combined to form the focusing optical system. By this means, four spots S can be formed.

At this time, the crystal axis of the concave lens 25 and the crystal axis of the birefringent plate 26 are positioned so as to both be perpendicular to the optical axis (in a horizontal direction in the plane of the paper), and so as to form an angle of 45° as seen from the optical axis direction. In this case, the pulsed laser light P should be made incident on the birefringent plate 26 as a non-parallel beam. For example, the light may be made incident on the concave lens 25 as a parallel beam.

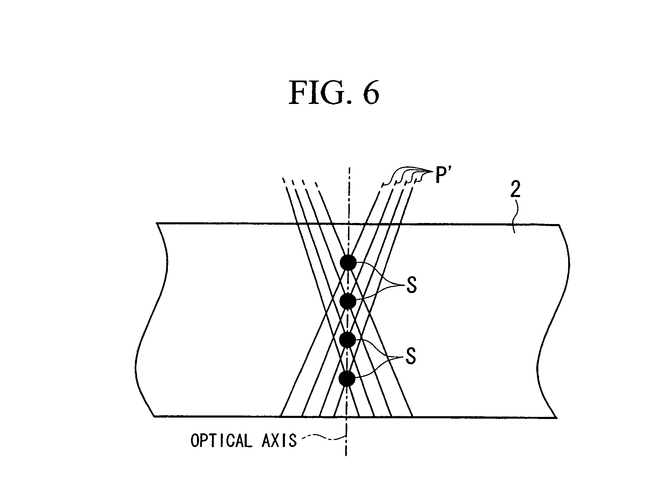

If the focusing optical system is configured in this way, when pulsed laser light P is incident on the concave lens 25, the light is split such that there are two focal positions depending on the polarization direction (split into the beam of the polarization component in the same direction as the crystal axis, and the beam of the polarization component perpendicular thereto). The two beams, upon incidence on the birefringent plate 26, are each split such that there are two focal positions according to the polarization component, because the crystal axis of the birefringent plate 26 as seen from the optical axis is rotated 45° with respect to the concave lens 25. That is, as shown in FIG. 6, the light is focused in four spots S, aligned in the optical axis direction, in the wafer 2.

Hence this configuration is particularly useful when the wafer 2 is thick, and a thick wafer 2 can be cut easily and reliably.

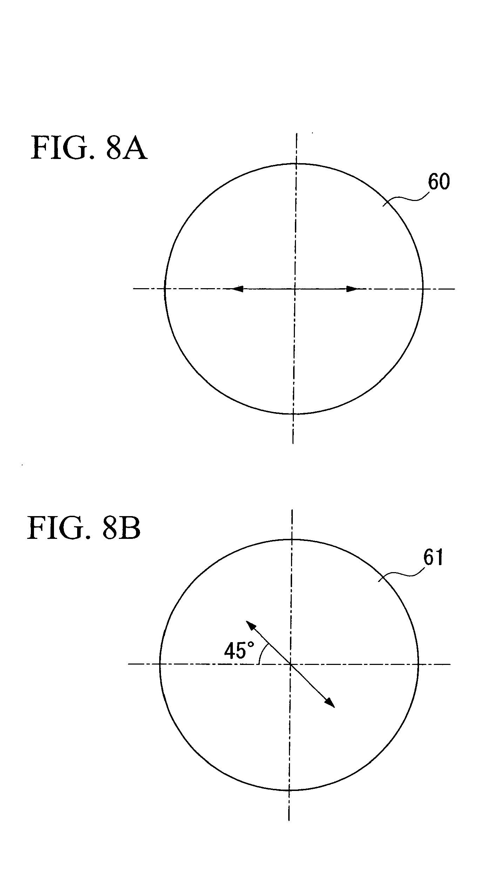

The above-described focusing optical system is configured by combining one birefringent plate and a concave lens; but two birefringent plates (optical axis-direction splitting elements) 60, 61, with different optical axis separation distances (parallel plates of different thickness), and an objective lens 6 may be used to configure a focusing optical system. The plates are positioned such that the crystal axes of the two birefringent plates 60, 61 are at relative angles of 45° as seen from the optical axis direction, as shown in FIG. 8.

In this case, a quarter-wavelength plate 62 is inserted before the objective lens 6, and the pulsed laser light P is made incident on the objective lens 6 as either linearly polarized light or as circularly polarized light.

When the focusing optical system is configured in this way, the pulsed laser light P, having passed through the quarter-wavelength plate 62 and objective lens 6, is incident on the first birefringent plate 60 as linearly polarized light with polarization direction at 45°, or as circularly polarized light. Upon incidence, the pulsed laser light P is separated by the birefringent plate 60 into two beams P' which are orthogonal polarization components with equal light quantities, and thereafter the beams are incident on the second (next) birefringent plate 61. Upon incidence on the second birefringent plate 61, the two beams P' are each separated into two beams which are orthogonal polarization components.

As a result, four beams P' are emitted from the second birefringent plate 61. By this means, the light can be focused in four spots S, adjacent in the optical axis direction, in the wafer 2.

Further, by altering the orthogonal component ratios through the polarization state of the incident pulsed laser light P, the intensity ratios of the four spots S can be modified. The intensity ratios of the four spots S can also be modified by changing the angle made by the crystal axes of the two birefringent plates 60 and 61.

As explained above, two birefringent plates 60 and 61 can be used to separate the pulsed laser light P into four spots S; and three birefringent plates can be used to separate the light into 8 spots S, while four birefringent plates can be used for separation into 16 spots S. In this way, the number of birefringent plates can be increased as necessary.

In the above first embodiment, two spots S are focused, above and below, so as to be positioned along the direction perpendicular to the surface of the wafer 2, and on the same optical axis; but the spots need not be focused on the same optical axis.

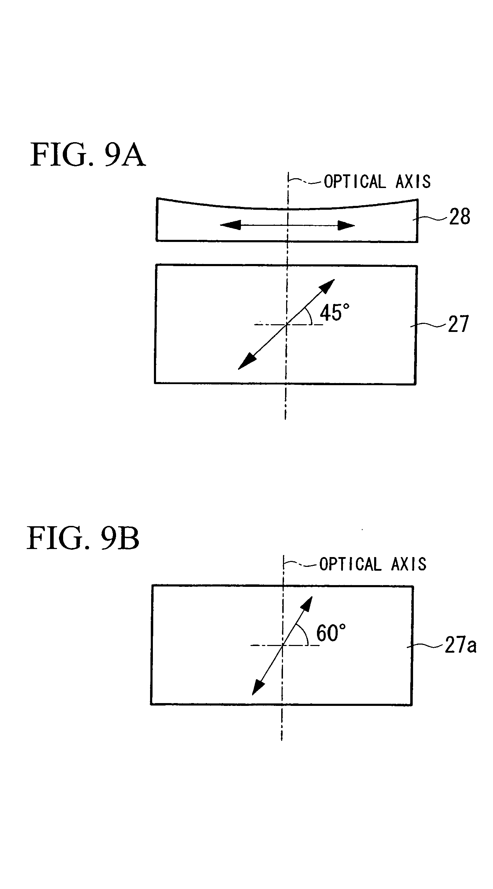

For example, the focusing optical system may be configured using an objective lens 6, a birefringent plate with birefringence (horizontal direction-splitting element) 27 which shifts in a horizontal direction the relative positions of a plurality of adjacent spots S, as shown in FIG. 9A, and a concave lens 28 positioned adjacent to the birefringent plate 27. The birefringent plate 27 has a crystal axis which is inclined 45° from the optical axis, and the concave lens 28 has a crystal axis in a direction perpendicular to the optical axis (a horizontal axis in the plane of the paper).

If such a focusing optical system is employed, when pulsed laser light P is incident on the concave lens 28, the light is split into two, with focal positions above and below, according to the polarization direction. Upon incidence of the light on the subsequent birefringent plate 27, the two focal positions, in the vertical direction, are shifted in a horizontal direction (laterally).

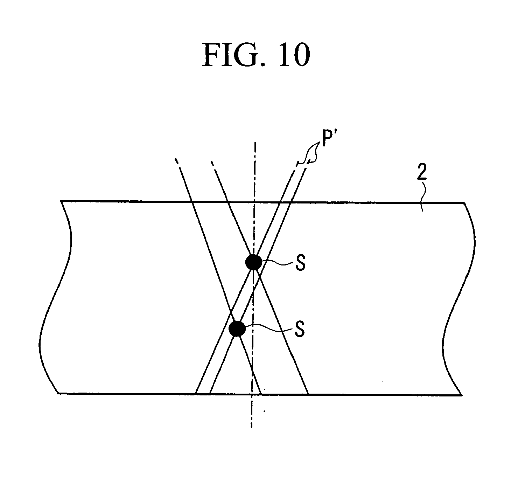

Hence as shown in FIG. 10, the light can be focused at two spots S, separated in the vertical direction and also in a horizontal direction within the wafer 2. In particular, by causing a horizontal shift in the scanning direction of the wafer 2 of the two spots S, stress in the scanning direction (cutting direction) within the wafer 2 can be further induced, so that cutting performance can be further enhanced.

A configuration is employed in which the crystal axis of the birefringent plate 27 is inclined at a 45° angle from the optical axis; but other configurations may be used, and as shown in FIG. 9B, the birefringent plate 27a may have the crystal axis inclined at 60° to the optical axis. In this case, a single birefringent plate 27a can be used to simultaneously induce shifts in a lateral direction and in the depth direction.

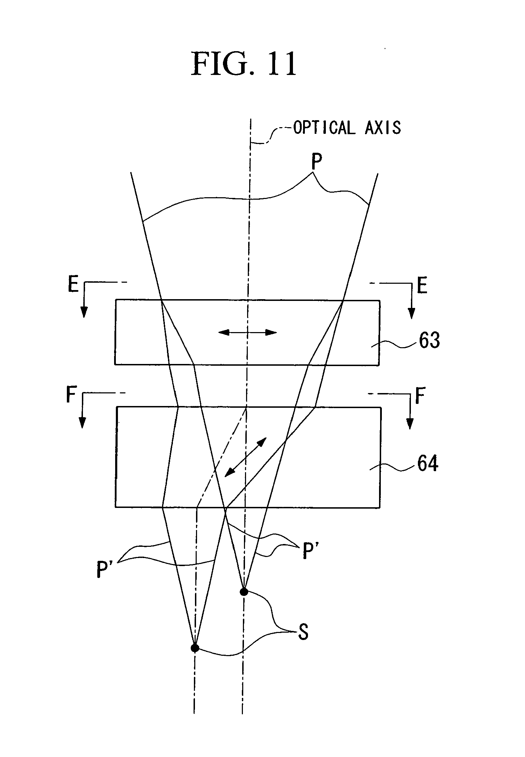

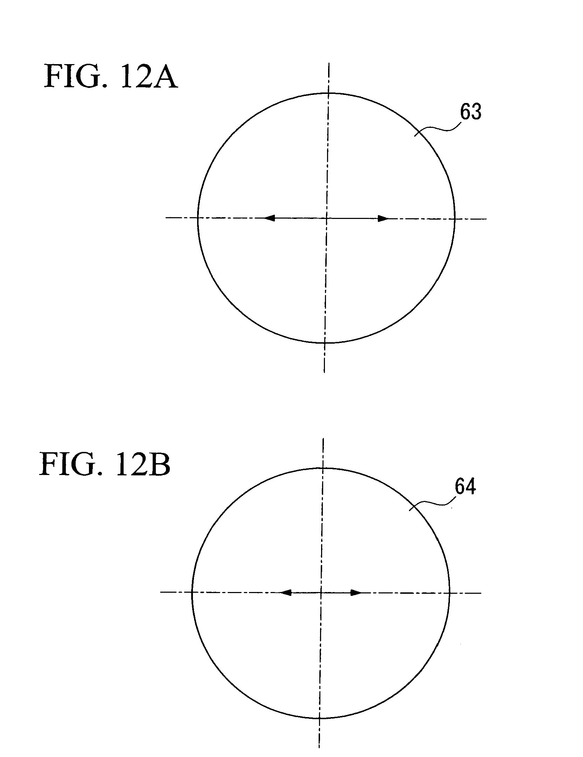

In the above-described focusing optical system, one birefringent plate 27 and a concave lens 28 are combined; however, as shown in FIG. 11, a birefringent plate (horizontal-direction splitting element) 63 and a birefringent plate (optical axis-direction splitting element) 64, which are two birefringent plates with different thicknesses, may be used to configure a focusing optical system. As indicated in FIG. 12, the crystal axes of the two birefringent plates 63, 64 are perpendicular to the optical axis (in the horizontal direction within the plane of the paper).

When such a focusing optical system is configured, the pulsed laser light P is separated in the horizontal direction into two beams P' by the initial birefringent plate 63. That is, the focal positions are separated horizontally. Then, by means of the second birefringent plate 64, the two beams P' are each shifted in the vertical direction. That is, the focal positions, which had been separated horizontally, can be shifted in the vertical (longitudinal) direction.

Hence similarly to FIG. 10, light can be focused on two spots S, separated in the vertical and in the horizontal directions, within the wafer 2.

In particular, an oblique modified layer can be provided, so that in addition to strain in the height direction, strain in the cutting direction can also be applied, and so the scanning time in the scan direction can be shortened and the cleanness of cutting can be improved.

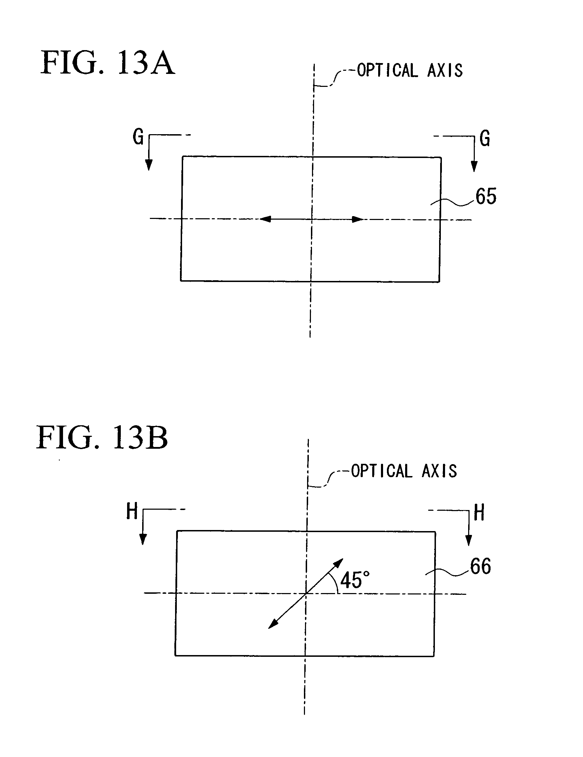

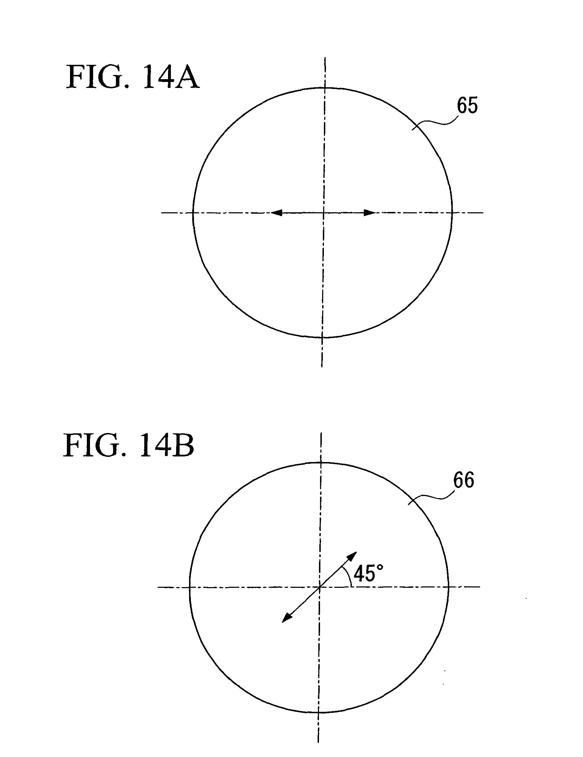

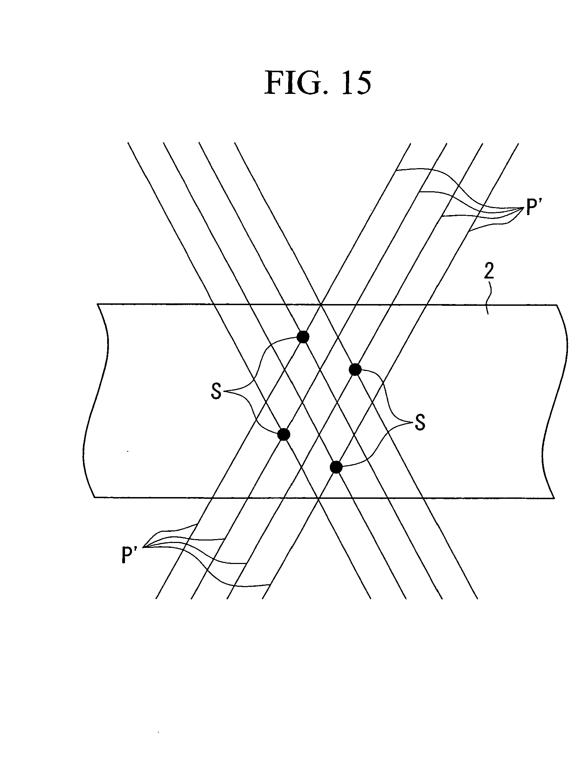

Further, as shown in FIG. 13 and FIG. 14, a birefringent plate 65 having a crystal axis perpendicular to the optical axis (in the horizontal direction in the plane of the paper) and a birefringent plate 66 having a crystal axis inclined 45° to the optical axis may be used to configure a focusing optical system, positioned at 45°. In this case, as shown in FIG. 15, light on four spots S in the vertical direction and in the horizontal direction within the wafer 2 can be focused.

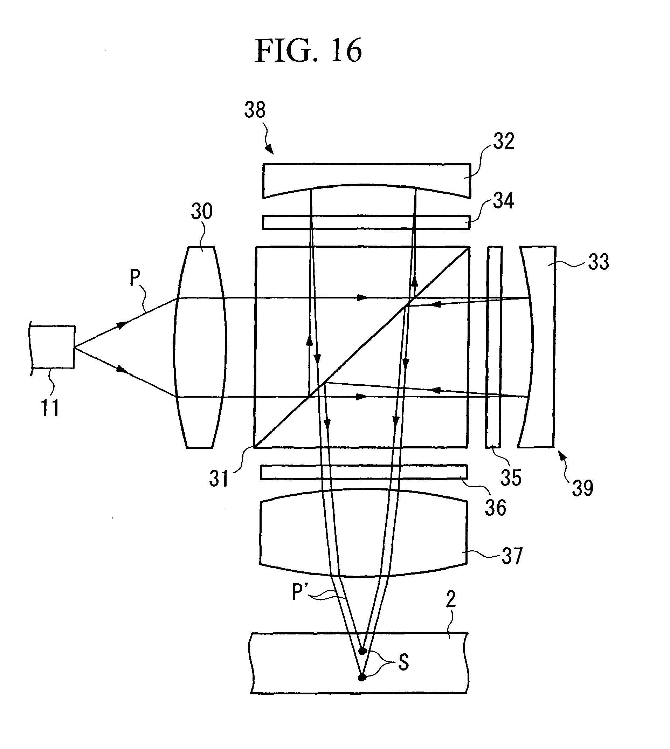

The focusing optical system may also be configured as shown in FIG. 16. That is, the focusing optical system may be provided with a first lens group 30, with positive refractive power, which renders the beam of pulsed laser light P emitted from the laser oscillation device 11 into a substantially parallel beam; a polarized beam splitter 31, which separates the beam from the first lens group 30 into reflected light and transmitted light; a first concave mirror 32 and second concave mirror 33, which reflect and focus the reflected light and the transmitted light, respectively, separated by the polarized beam splitter 31; a first quarter-wavelength plate 34, placed between the polarized beam splitter 31 and the first concave mirror 32; a second quarter-wavelength plate 35, placed between the polarized beam splitter 31 and the second concave mirror 33; and, a second lens group 37, having positive refractive power, which focuses the beams which have passed through the first quarter-wavelength plate 34 and the second quarter-wavelength plate 35, via the polarized beam splitter 31, and via a third quarter-wavelength plate 36, in the interior of the wafer 2.

A difference in image-forming characteristics is provided between the first optical system 38, provided with the first lens group 30, second lens group 37, and first concave mirror 32, and the second optical system 39, provided with the first lens group 30, second lens group 37, and second concave mirror 33. That is, the convergence states are different for the beam reflected by the first concave mirror 32 and for the beam reflected by the second concave mirror 33.

A case is explained in which a focusing optical system configured in this way is used to focus two spots S along the optical axis direction within a wafer 2.

First, pulsed laser light P emitted from the laser oscillation device 11 is rendered into a parallel beam by the first lens group 30, and is incident on the polarized beam splitter 31. At this time, the laser oscillating device 11 emits unpolarized pulsed laser light P.

Of the pulsed laser light P incident on the polarized beam splitter 31, the beam P' of P linearly polarized light is deflected by 90° and is incident on the first quarter-wavelength plate 34, and after becoming circularly polarized light is incident on the first concave mirror 32. This light is reflected while converging by means of the first concave mirror 32. The reflected beam P' is incident again on the first quarter-wavelength plate 34 to become a beam of S polarization light. Hence this beam P' is transmitted to the polarized beam splitter 31. After transmission, the light is changed into circularly polarized light by the third quarter-wavelength plate 36, and is incident on the second lens group 37.

On the other hand, of the pulsed laser light P incident on the polarized beam splitter 31, the beam P' of S polarized light is transmitted to the polarized beam splitter 31, is incident on the second quarter-wavelength plate 35 to become circularly polarized light, and is incident on the second concave mirror 33. The light is then reflected while converging by the second concave mirror 33. The reflected beam P' is incident again on the second quarter-wavelength plate 35, becoming a beam P' of P polarization light. Hence the beam P' is reflected by the polarized beam splitter 31 so as to have its optical axis direction changed by 90°. After reflection, the light is rendered into circularly polarized light by the third quarter-wavelength plate 36, and is incident on the second lens group 37.

In this way, the pulsed laser light P is split into two beams P', each of which is incident on the second lens group 37. By means of the second lens group 37, the beams P' are focused as two spots S within the wafer 2.

In this focusing optical system, when the laser oscillation device 11 emits P polarized light or P pulsed laser light of S polarized light to be incident on the polarized beam splitter 31, normal light can be made incident on the second lens group 37, and so selective use of the beams is also possible according to circumstances.

Moreover, in the above focusing optical system, by making the first concave mirror 32 and the second concave mirror 33 slightly eccentric with respect to each other, in addition to the vertical shift, the spots S can be focused within the wafer 2 with a horizontal shift also.

In particular, by using this focusing optical system, devices such as ICs, LSIs and other semiconductor devices, CCDs and other image pick up devices, liquid crystal panels and other display devices, magnetic heads, and other devices, can be cut more accurately.

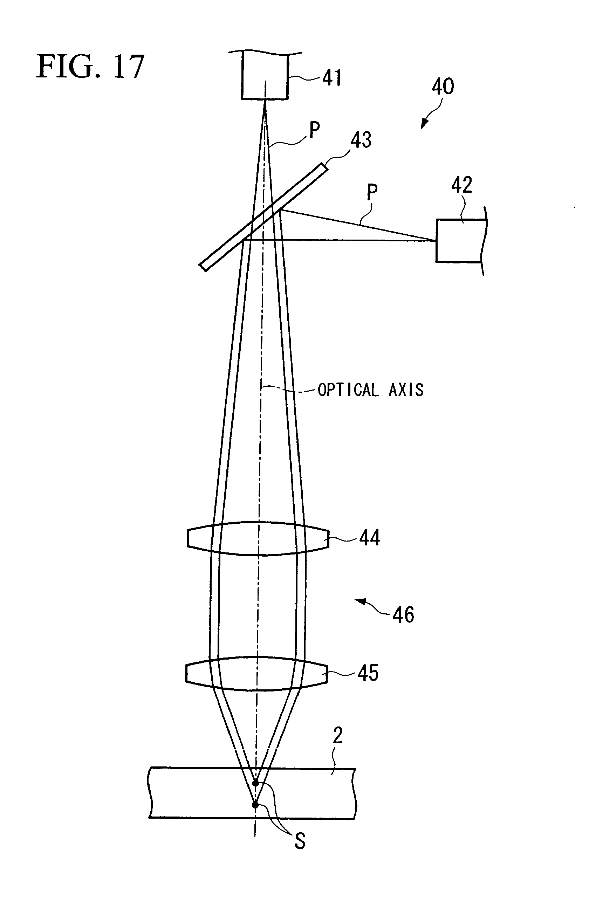

Next, a second embodiment of a laser machining apparatus of this invention is explained, referring to FIG. 17. In this second embodiment, portions which are the same as components in the first embodiment are assigned the same symbols, and explanations are omitted.

Differences between the second embodiment and the first embodiment include the fact that, in the first embodiment, differences in the polarization of the pulsed laser light P are used to split the pulsed laser light P into two beams P' while focusing the beams on two spots S, whereas in the laser machining apparatus 40 of the second embodiment uses differences in wavelength to focus the pulsed laser light P as two spots S.

That is, the laser machining apparatus 40 of this embodiment is provided with a first laser oscillation device (emission device) 41 and a second laser oscillation device (emission device) 42, which emit pulsed laser light P at different wavelengths; a half-mirror 43, which combines the pulsed laser light P from the two laser oscillation devices 41, 42 on the same optical axis; a chromatic aberration-generating lens 44, which changes the focal position according to the wavelength of the pulsed laser light P; and an objective lens 45, which focuses the pulsed laser light P on two spots S, with focal positions aligned in the optical axis direction perpendicular to the surface within the wafer 2.

The chromatic aberration-generating lens 44 and objective lens 45 together form a focusing optical system 46.

In a laser machining apparatus 40 configured in this way, pulsed laser light P emitted from the first laser oscillation device 41 passes through the half-mirror 43 and is incident on the chromatic aberration-generating lens 44. And, pulsed laser light P emitted from the second laser oscillation device 42 is reflected by the half-mirror 43 and is incident on the chromatic aberration-generating lens 44. Each of the beams of pulsed laser light P incident on the chromatic aberration-generating lens 44 is emitted such that the focal position is different, according to the wavelength, and are focused by the objective lens 45 as two spots S, separated in the depth direction (thickness direction), within the wafer 2.

In this way, differences in the wavelength of pulsed laser light P can be used to easily form two spots S.

In this embodiment, two spots are formed; but by emitting a plurality of beams of pulsed laser light P with different wavelengths, a desired number of a plurality of spots S can be formed.

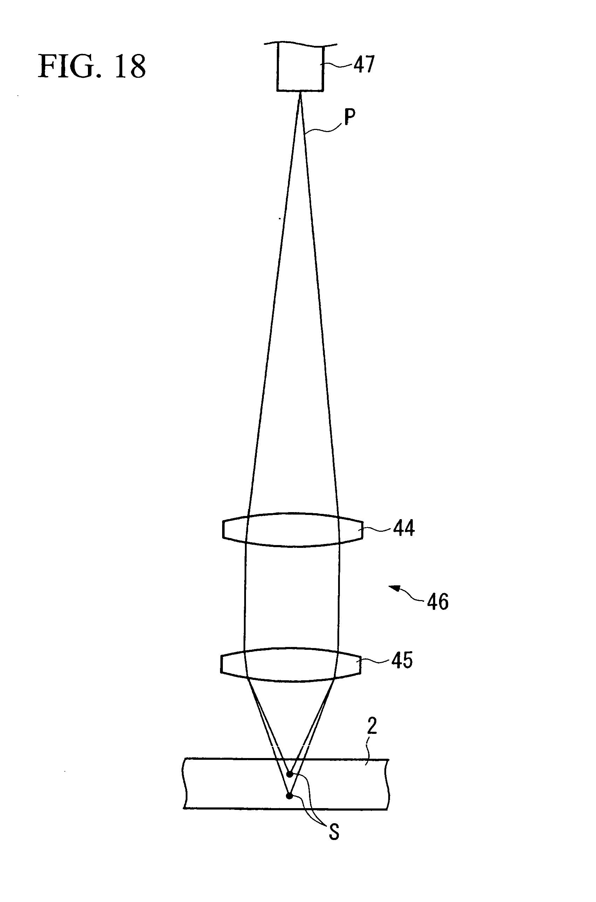

In the second embodiment, pulsed laser light beams of different wavelengths are emitted by the first laser oscillation device 41 and by the second laser oscillation device 42; but as shown in FIG. 18, for example, a tunable oscillation device (emission device) 47, the wavelength of which can be selected arbitrarily, and enabling simultaneous emission of light at a plurality of selected wavelengths, may be used. By this means, the configuration can be made more simple.

In each of the above embodiments, light on a plurality of spots S is focused in the thickness direction of the wafer 2; however, the light may be focused not in the interior, but on the surface and on the rear surface instead. Also, by moving the stage 3 in the X and Y directions, a plurality of spots S are moved relative to the wafer 2; but by employing instead a configuration in which the emission device 4 and similar are moved in the X and Y directions, the plurality of spots S can be moved relative to the wafer 2.

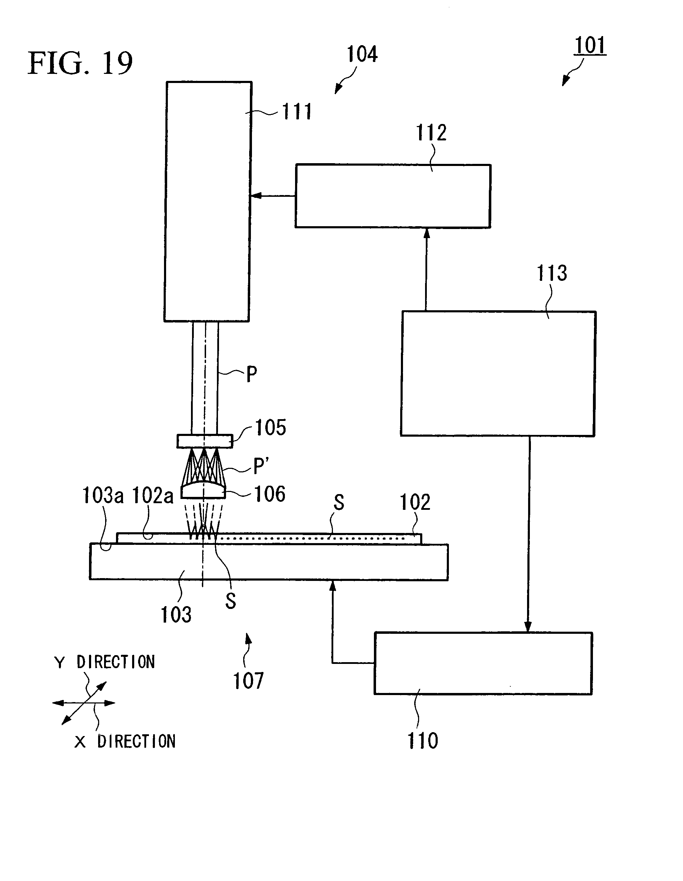

Next, a third embodiment of a laser machining apparatus of this invention is explained, referring to FIG. 19 through FIG. 24. The laser machining apparatus 101 of this embodiment is explained as an apparatus for finely cutting a wafer (workpiece) 102 formed as a circular shape, into chips using laser machining.

As shown in FIG. 19, this laser machining apparatus 101 is provided with a stage 103, on the mounting surface 103a of which is mounted a wafer 102 so as to be parallel to the horizontal plane; emission device 104 for emitting pulsed laser light P toward the surface 102a or interior of the wafer 102; a diffraction grating (laser beam-splitting element, angle-resolving beam-splitting element) 105, which splits the pulsed laser light P into a plurality of beams P'; focusing lens (focusing optical system) 106, which focuses the plurality of beams P' at a plurality of spots S within the wafer 102; and movement device 107 to move the plurality of spots S in a horizontal direction, relative to the wafer 102.

The diffraction grating 105 and focusing lens 106 form an optical system which splits the pulsed laser light P into a plurality of beams P', and focuses the beams as a plurality of spots S on the wafer surface 102a or within the wafer 102.

The stage 103 is configured to enable movement in X and Y directions parallel to the horizontal plane. Through movement of this stage 103, the plurality of spots S can be moved in horizontal directions relative to the wafer 102, as explained above. Further, motion of the stage 103 in the X and Y directions is controlled by the stage controller 110. That is, the stage 103 and stage controller 110 function as the above-described movement device 107.

The laser oscillation device 111 is placed above the wafer 102, to emit pulsed laser light P perpendicular to the surface 102a of the wafer 102. This laser oscillation device has functions for emitting intense pulsed laser light P, of pulse width 1 µs or shorter for example, with a certain limited repetition frequency. The laser oscillation device 111 is configured to emit the pulsed laser light P in a parallel-beam state. This laser oscillation device 111 is controlled by the laser oscillation control portion 112 through the emission timing or similar of the pulsed laser light P. That is, the laser oscillation device 111 and laser oscillation control portion 112 function as the above-described emission device 104.

The laser oscillation control portion 112 and stage controller 110 are controlled in an integrated manner by the system control portion 113.

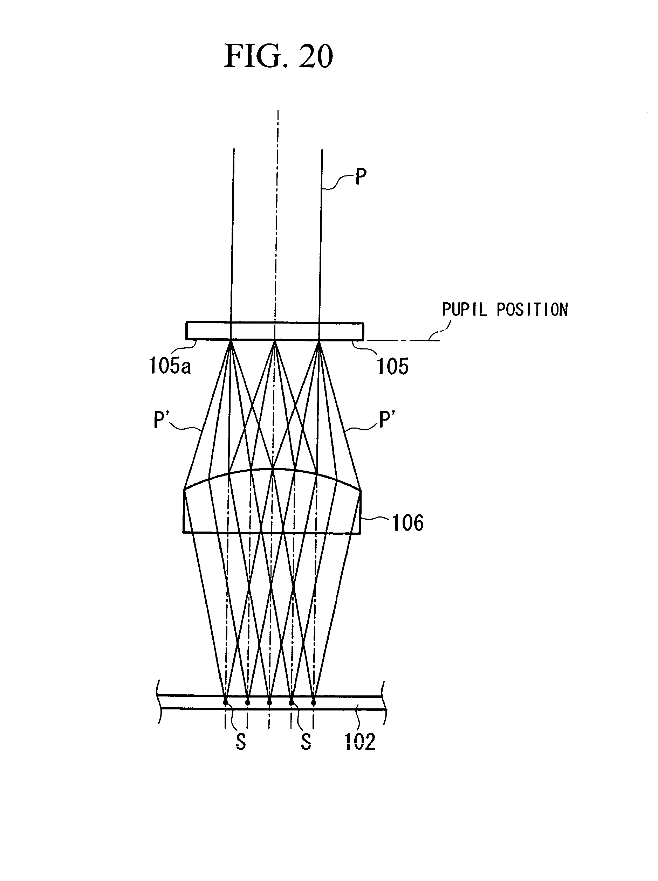

The diffraction grating 105 is a transmissive diffraction grating which splits pulsed laser light P, emitted from the laser oscillation device 111, into a plurality of beams P' at different angles, as shown in FIG. 20, and is placed such that the distance from the wafer 102 and laser oscillation device 111 is such that the splitting plane 105a substantially coincides with the pupil position of the focusing lens 106. In this diffraction grating 105, the diffraction efficiency is controlled according to the diffraction order as in the case of a CGH (Computer Generated Hologram), so that the splitting light quantity ratios of the beams P' can be made substantially equal. Further, when the diffraction grating 105 splits the pulsed laser light P into a plurality of beams P', the splitting is performed such that the beams are expanded over a plane (linearly) (in the horizontal direction in the plane of the paper).

Further, as shown in FIG. 21, the diffraction grating 105 can be rotated about the Z axis, which is perpendicular to the surface of the wafer 102, by a rotation mechanism (rotation device) 114.

The focusing lens 106 is placed between the diffraction grating 105 and the wafer 102, and has the function of focusing the plurality of beams P', which have been split by the diffraction grating 105 so as to be expanded in a plane, at a plurality of spots S in linear form, aligned in a horizontal direction, as shown in FIG. 20 and FIG. 22. In this embodiment, an explanation is given assuming the number of spots S is five.

A case is explained of using a laser machining apparatus 101 with this configuration to dice a wafer 102 into chips. As the initial state, the orientation of the diffraction grating 105 is set by the rotating mechanism 114 such that the spots S are aligned in the X direction of the wafer 102, as shown in FIG. 21A.

First, the stage controller 110 is used to move the stage 103 in the X and Y directions, so that the wafer 102 is moved to the cutting start position, as shown in FIG. 23. After movement to the cutting start position, the laser oscillation control portion 112 operates the laser oscillation device 111, so that pulsed laser light P is emitted in a parallel-beam state. The emitted pulsed laser light P is incident on the diffraction grating 105, as shown in FIG. 20, and is split into a plurality of beams P', such as for example five beams P' (-2 order light, -1 order light, 0 order light, 1 order light, 2 order light). At this time, the splitting liquid quantity ratios of the beams P' are substantially the same, as explained above.

These beams P' are incident on the focusing lens 106 and are focused as a plurality of spots S within the wafer 102. That is, as shown in FIG. 22, the light is focused as five spots S, aligned in a straight line in the X direction of the wafer 102. Energy is concentrated at high density at each of the spots S to induce cracks. In this way, each time one pulse of the pulsed laser light P is emitted, five cracks, aligned in a straight line within the wafer 102, are induced simultaneously. In particular, the splitting plane 105a of the diffraction grating 105 is positioned at the pupil position of the focusing lens 106, so that the telecentric properties of the beams P' focused at each of the spots S can be secured, and uniform machining becomes possible.

Simultaneously with the above-described emission of pulsed laser light P, the system control portion 113 sends a signal to the stage controller 110 and causes the wafer 102 to be moved, via the stage 103, in the X direction, as shown in FIG. 21. That is, the stage 103 is moved in the direction of splitting of the spots S. By this means, five cracks can be simultaneously induced in the movement direction (scanning direction). Hence even if the stage 103 is moved five times faster than the movement speed of the prior art, for example, cracks can be induced continuously in the movement direction as if forming broken lines, while maintaining the maximum machining interval between cracks. Cracks aligned in such broken-line form become guide lines during the subsequent cutting of the wafer 102.

As shown in FIG. 23, scanning in the X direction is repeated in order, so that cracks in the X direction are induced across the entire area of the wafer 102. In other words, a plurality of broken lines in the X direction are formed. Here, as explained above, the maximum machining interval between cracks can be maintained while moving the stage 2 at a speed five times faster than in the prior art, so that the time required for laser machining can be shortened.

After the completion of laser machining in the X direction, the diffraction grating 105 is rotated through 90° about the Z axis by the rotation mechanism 114, as shown in FIG. 21B, so that the plurality of spots S is aligned in a straight line in the Y direction of the wafer 102. After rotating the plurality of spots S, the stage controller 110 moves the wafer 102 in the Y direction via the stage 103, and scanning in the Y direction is repeated in order in a manner similar to that described above, to perform laser machining in the Y direction across the entire area of the wafer 102. Similarly in this Y-direction scanning also, the stage 2 can be moved at a speed five times faster than in the prior art even while maintaining the maximum machining interval between cracks, so that the time required for laser machining can be shortened.

When the above-described scanning in the X and Y directions ends, cracks have been formed continuously within the wafer 102 in the X and Y directions, as if forming a mesh, with the maximum machining interval maintained. Here, by applying a degree of external force to the wafer 102, the wafer 102 can be cut along the cracks joined in a broken-line manner, to render the wafer 102 into chips.

As explained above, by means of the laser machining apparatus 101 of this embodiment, the stage 2 can be moved at a speed five times faster than in the prior art in the X and Y directions while maintaining the maximum machining interval between cracks, without altering the repetition frequency of the pulsed laser light P, so that the time required for laser machining can be shortened, and throughput can be improved. Further, by means of the rotation mechanism 114 the diffraction grating 105 can be rotated, so that the direction of the plurality of spots S can easily and smoothly be changed, so that in combination with movement of the stage 103, laser machining can easily be performed at high speed.

Moreover, the diffraction grating 105 can be used to split the pulsed laser light P reliably into the desired plurality of beams P'. Further, the splitting plane 105a is positioned at the pupil position of the focusing lens 106, so that the telecentric properties of the beams focused on each of the spots S can be secured, and uniformity can be maintained during laser machining. Advantageous results are obtained even if the splitting plane 105a is not necessarily positioned at the pupil position of the focusing lens 106.

In the above third embodiment, a case of five spots was explained; but the number of spots is not limited to five, and any plurality of spots may be used. Further, the speed of movement of the stage 103 may be increased in proportion to the number of spots S. For example, in the case of a configuration in which light is focused at n spots S, the stage 103 can be moved at a speed which is n times faster than in the prior art.

Moreover, the stage 103 was moved in the direction of splitting of the spots S; but other methods may be used, and as shown in FIG. 24, the stage 103 may be moved in a direction which is substantially perpendicular to the splitting direction of the spots S. In this case, the speed of the stage 103 remains at the speed of the prior art, and spots are formed in a plurality of lines at once, so that the number of scans can be reduced. Hence the time required for laser machining can be shortened, and throughput can be improved.

Also, when changing the direction of motion of the stage 2 from the X direction to the Y direction, the diffraction grating 105 was rotated; but another method may be employed, and for example the wafer 102 may be rotated by 90° so that the direction of splitting of the spots S and the scanning direction coincide.

Further, in the third embodiment the spots S were aligned in a straight line; but other methods are possible, and for example the pulsed laser light P may be split into a plurality of beams P' by a diffraction grating 105 so as to be expanded over two orthogonal planes, after which a focusing lens 106 is used to focus the beams as a plurality of spots S aligned in two dimensions within the wafer 102, that is, in the X and Y directions (with n spots in the X direction, and m spots in the Y direction).

In this case, the stage 103 can be moved at a speed in the X direction which is n times faster than in the prior art, while also reducing the number of scans to 1/m, while maintaining the machining interval between cracks within the maximum machining interval, so that throughput can be improved.

Next, a fourth embodiment of a laser machining apparatus of the invention is explained, referring to FIG. 25. In this fourth embodiment, portions which are the same as components in the third embodiment are assigned the same symbols, and explanations are omitted.

Differences between the fourth embodiment and the third embodiment include the fact that, in the third embodiment, the splitting plane 105a of the diffraction grating 105 was positioned at the pupil position of the focusing lens 106, whereas in the fourth embodiment, the splitting plane 105a of the diffraction grating 105 is positioned at the position optically conjugate with the pupil position of the focusing lens 106.

That is, in the laser machining apparatus of this embodiment, a first relay lens 120 and second relay lens 121 are positioned between the diffraction grating 105 and the focusing lens 106, as shown in FIG. 25. By means of these relay lenses 120 and 121, the diffraction grating 105 is positioned such that the splitting plane 105a is at the position which is optically conjugate with the pupil position of the focusing lens 106.

Through this configuration, even situations in which the pupil position of the focusing lens 106 is within the lens, or the diffraction grating 105 cannot be placed directly at the pupil position, can be accommodated, for greater freedom of design.

Next, a fifth embodiment of a laser machining apparatus of the invention is explained, referring to FIG. 26 and FIG. 27. In this fifth embodiment, portions which are the same as components in the third embodiment are assigned the same symbols, and explanations are omitted.

Differences between the fifth embodiment and the third embodiment include the fact that, in the third embodiment, a diffraction grating 105 which is a laser beam-splitting element was used to split the pulsed laser light P into a plurality of beams P', whereas in the fifth embodiment, a Nomarski prism 125 is used as the laser beam-splitting element (angle-resolving beam-splitting element).

The Nomarski prism 125 is configured by combining the crystal axes of crystals such as quartz having birefringence, and is for example designed such that the crystal axis on the side of the laser oscillation device 111 is perpendicular to the optical axis (perpendicular to the plane of the paper), and the crystal axis on the side of the focusing lens 106 is inclined at a 45° angle to the optical axis.

The localization plane (splitting plane) 125a of the Nomarski prism 125 is positioned so as to coincide with the pupil position within the focusing lens 106.

The laser machining apparatus of this embodiment is configured such that either unpolarized pulsed laser light P, or pulsed laser light P which is circularly polarized through use of a quarter-wavelength plate, is incident on the Nomarski prism 125. That is, when a laser oscillation device 111 which emits pulsed laser light P which is already in a linearly polarized state is adopted, a quarter-wavelength plate may be used to convert the light to circularly polarized light. In this way, the laser oscillation device 111 can emit pulsed laser light P regardless of the state of polarization.

By means of a laser machining apparatus configured in this way, when the pulsed laser light P is split into two (a plurality of) beams P', the pulsed laser light P emitted from the laser oscillation device 111 is first incident on the Nomarski prism 125, either as unpolarized light or as circularly polarized light. The incident pulsed laser light P is refracted and separated into two orthogonal linearly polarized components, to split the light into two beams P'. The beams P' thus split are focused at two spots S within the wafer 102 by the focusing lens 106. At this time, the localization plane 125a coincides with the pupil position of the focusing lens 106, so that satisfactory beam splitting is possible. The pulsed laser light P is incident on the Nomarski prism 125 as either unpolarized or as circularly polarized light, so that the splitting ratio is uniform, and two spots with equal quantities of light can be formed.

In this way, a Nomarski prism 125 can be used to easily split pulsed laser light P into two beams P', without using a special optical system.

Here, when the Nomarski prism 125 is for example configured as shown in FIG. 27, that is, by joining a first quartz crystal 125b with crystal axis perpendicular to the optical axis (perpendicular to the plane of the paper) and a second quartz crystal 125c with crystal axis in a direction inclined 45° from the optical axis, and with vertex angles of 16°20' for each, if the pulsed laser light P is incident at a position a distance of 3 mm from the joining plane 125d, then two beams P' can be obtained at a distance of 15 mm from the second quartz crystal 125c, separated by an angle of 4 mrads. When combining this Nomarski prism 125 with a focusing lens (100× objective lens) 106 with focal length 1.8 mm, two spots S can be obtained at an interval of 7.2 µm (1.8 mm x 4 mrads).

A quarter-wavelength plate may be positioned between the Nomarski prism 125 and the focusing lens 106. By this means, the two beams P' incident on the focusing lens 106 can be placed in a circularly polarized state, and the polarization components at the spots S can be made uniform. Hence the effect of differences in polarization components on machining properties can be suppressed to the extent possible.

Next, a sixth embodiment of a laser machining apparatus of this invention is explained, referring to FIG. 28. In this sixth embodiment, portions which are the same as components in the third embodiment are assigned the same symbols, and explanations are omitted.

Differences between the sixth embodiment and the third embodiment include the fact that, in the third embodiment, a diffraction grating 105 which is a laser beam-splitting element was used to split the pulsed laser light P into a plurality of beams P', whereas in the sixth embodiment, a mirror prism (laser beam-splitting element, angle-resolving beam-splitting element) 127 is used to split the pulsed laser light P into two (a plurality of) beams P'.

That is, as shown in FIG. 28, a half-mirror 128 is placed on the optical axis of the pulsed laser light P between the laser oscillation device 111 and the focusing lens 106. This half-mirror 128 functions to transmit 50% of the pulsed laser light P and reflect 50%. Pulsed laser light P which is reflected by the half-mirror 128 is reflected by the mirror 129 toward the pupil position of the focusing lens 106. That is, the pulsed laser light P is split by the half-mirror 128 and mirror 129 into two beams P'. The half-mirror 128 and mirror 129 together function as the above-described mirror prism 127.

By means of a laser machining apparatus of this embodiment, the mirror prism 127 can be used to easily split the pulsed laser light P into two beams P', without using a special optical system.

Here the pulsed laser light P is split into two beams P', but the light can also be split into two or more beams P' depending on the combination of the half-mirror 128 and mirror 129.

In this method, beams can be split over larger angles than in the cases of a diffraction grating or Nomarski prism. This is particularly suitable for methods in which, the light can be split to form spots S in the direction perpendicular to the direction of movement of the stage 102, to perform machining simultaneously along two or more lines.

Next, a seventh embodiment of a laser machining apparatus of the invention is explained, referring to FIG. 29. In this seventh embodiment, portions which are the same as components in the third embodiment are assigned the same symbols, and explanations are omitted.

Differences between the seventh embodiment and the third embodiment include the fact that, in the third embodiment, a diffraction grating 105 which is a laser beam-splitting element was used to split the pulsed laser light P into a plurality of beams P', whereas in the seventh embodiment, a polarized beam splitter (laser beam-splitting element, angle-resolving beam-splitting element) 130 is used to split the pulsed laser light P into two (a plurality of) beams P'.

That is, the polarized beam splitter (PBS) 130 is placed between the laser oscillation device 111 and the focusing lens 106, as shown in FIG. 29, to split the incident pulsed laser light P into two beams P' according to the polarization. In other words, the polarized beam splitter 130 has a function for transmitting a beam P'(p) of P component linearly polarized light with oscillation component parallel to the incidence plane, and of reflecting a beam P'(s) of S component linearly polarized light with oscillation component perpendicular to the incidence plane; by this means the pulsed laser light P is split into two beams P'.

A first quarter-wavelength plate 131 is placed on one side of the polarized beam splitter 130, and a first mirror 132 is placed adjacent to the first quarter-wavelength plate 131. The first mirror 132 reflects the beam P' reflected by the polarized beam splitter 130, changing the angle of the optical axis somewhat.

Similarly on the other side of the polarized beam splitter 130, a second quarter-wavelength plate 133 and second mirror 134 are provided. The second mirror 134 reflects the beam reflected by the first mirror 31, changing the angle of the optical axis somewhat.

A case in which pulsed laser light P is split into two beams P' by a laser machining apparatus configured in this way is explained. The pulsed laser light P emitted from the laser oscillation device 111 is incident on the polarized beam splitter 130 as a parallel beam. Of this incident pulsed laser light P, a beam P' of P component linearly polarized light P'(p) passes through the polarized beam splitter 130 and is incident on the focusing lens 106.

On the other hand, of the incident pulsed laser light P, a beam of S component linearly polarized light P'(s) is reflected by the reflecting face of the polarized beam splitter 130, so that the optical axis is changed by 90°, and is incident on the first quarter-wavelength plate 131. The incident beam P'(s) becomes circularly polarized light due to the first quarter-wavelength plate 131 and is incident on the first mirror 132. After reflection by the first mirror 132, the beam is again incident on the first quarter-wavelength plate 131. At this time, the circularly polarized light becomes P component linearly polarized light, with polarization direction rotated 90° from the original S component polarization direction, due to the first quarter-wavelength plate 131. The beam P' is reflected with the angle of the optical axis changed somewhat.

Upon again returning to the polarized beam splitter 130, the light is again P component light, and so passes through the polarized light beam splitter and is incident on the second quarter-wavelength plate 133. The incident beam P'(p) becomes circularly polarized light due to the second quarter-wavelength plate 133, and is incident on the second mirror 134, and is also reflected with the angle of the optical axis changed somewhat. After reflection, when the light is again incident on the second quarter-wavelength plate 133, the circularly polarized light becomes S component linearly polarized light, with the polarization direction rotated 90° from the original P component direction, and the beam is incident on the polarized beam splitter 130.

The beam P'(s) incident on the polarized beam splitter 130 is an S component beam, and so is reflected by the reflecting face of the polarized beam splitter 130, such that the optical axis is changed by 90°, and the beam is incident on the focusing lens 106. That is, two beams P', which are the P component beam which had originally passed through the polarized beam splitter 130 and the S component beam which has been reflected twice by the left and right mirrors 132 and 134, are incident on the focusing lens 106.

By adjusting the inclinations of the left and right mirrors 132 and 134, the angle of the S component beam relative to the P component beam can be adjusted arbitrarily. These two beams at different angles can be focused on two spots S within the wafer 102.

In this way, by combining a polarized beam splitter 130 and the two quarter-wavelength plates 131, 133 and two mirrors 132, 134, the pulsed laser light P can easily be split into two beams P' at arbitrary angles, without using a special optical system.

In this embodiment also, a quarter-wavelength plate may be positioned between the polarized beam splitter 130 and the focusing lens 106. By this means, two beams P' in a circularly polarized state can be made incident on the focusing lens 106, and the polarization components at each spot can be made uniform. Hence the effect on machining properties of differences in polarization components can be suppressed to the extent possible.

In this method, the inclination of the mirrors 132, 134 was such that the mirrors were tilted within a plane parallel to the plane of the paper; but the mirrors can instead be tilted within a plane perpendicular to the plane of the paper. Hence the P component of polarized light transmitted by the polarized beam splitter 130 can be given an inclination in both the X and Y directions, so that splitting into spots S is possible not only parallel to the plane of the paper, as shown, but as perpendicularly or in a combination of directions.

Next, an eighth embodiment of a laser machining apparatus of the invention is explained, referring to FIG. 30. In this eighth embodiment, portions which are the same as components in the first embodiment are assigned the same symbols, and explanations are omitted.

Differences between the eighth embodiment and the third embodiment include the fact that, in the third embodiment, a diffraction grating 105 which is a laser beam-splitting element was used to split the pulsed laser light P into a plurality of beams P' with different angles, whereas in the eighth embodiment, birefringent quartz or another birefringent crystal (parallel-displacement beam-splitting element, birefringent optical element) 140 is used as a laser beam-splitting element, to split the pulsed laser light P into two (a plurality of) beams P' which are displaced parallel to the optical axis.

That is, as shown in FIG. 30, the birefringent crystal 140 is placed between the laser oscillation device 111 and the focusing lens 106. This birefringent crystal 140 is placed in the convergent optical system 141, that is, between the first convex lens 142 and the second convex lens 143. By this means, the pulsed laser light P is incident on the birefringent crystal 140 as a non-parallel beam.

A case is explained in which pulsed laser light is split into two beams P' by a laser machining apparatus configured as described above. First, pulsed laser light P emitted from the laser oscillation device 111 becomes a converging beam due to the first convex lens 142, and in this non-parallel beam state is incident on the birefringent crystal 140. Upon incidence on the birefringent crystal 140, the pulsed laser light P is refracted according to the polarization direction, and is split into two beams P' such that the optical axes are parallel-displaced. These beams P' are again rendered into a parallel beam state by the second convex lens 143, and are incident on the focusing lens 106. By this means, light is focused on a plurality of spots S within the wafer 102.

In this embodiment, a birefringent crystal 140 is adopted as the laser beam-splitting element, but a mirror prism may be used as well.

When, as the birefringent crystal 140, a calcite crystal 10 mm is used, for example, the light can be split into two beams with the optical axis parallel-displaced by approximately 1 mm. In this case, if a focusing optical system (formed from an objective lens 106 and convex lens 143) with an image-forming magnification of 100× is used for reduced projection, then spots S are formed with an interval of 10 µm.

Further, in this embodiment the birefringent crystal 140 is placed at the image-side focal position; but as shown in FIG. 31, the crystal may be placed at a position shifted from the focal position.

As shown in FIG. 32, birefringent crystals 140 can be cascade-connected, so that the pulsed laser light P is split into a plurality of 2ⁿ beams P'. That is, birefringent crystals 140 of different thicknesses are positioned with quarter-wavelength plates 144 therebetween. As a result, the pulsed laser light P is split into an S component linearly-polarized beam P'(s) and a P component linearly-polarized beam P'(p) by the initial birefringent crystal 140. Then, the light is converted into circularly polarized light by the quarter-wavelength plate 144, and the next birefringent crystal 140 splits the respective beams into beams P'(p)(s) having S component and P component linearly polarized light.

By thus cascade-connecting birefringent crystals 140, the pulsed laser light P can easily be split into the desired number of beams.

In each of the above embodiments, examples were described in which light was separated into a plurality of spots S; but using entirely the same configuration, and by reducing the amount of splitting into spots S, a plurality of spots S in proximity can be used to machine a single location, as shown in FIG. 33.

When a single spot S is employed, only isotropic machining is possible; but when a plurality of spots S in proximity are used, the machined position can be endowed with anisotropy, by means of the direction and amount by which spots S are shifted. Through this anisotropy, the strain and cracks within the wafer 102 can intentionally be endowed with a directionality, thus improving the linking between adjacent machined points, with the advantage that cutting of the wafer 102 can be facilitated.

In each of the above embodiments, spots S are focused within the wafer 102; but a configuration may be used in which spots are focused on the surface 102a of the wafer 102. The selection can be made as appropriate according to the thickness of the wafer 102.

Also, the plurality of spots S were moved relative to the wafer 102 by moving the stage 103 in the X and Y directions; but by employing a configuration in which the emission device 104, diffraction grating 105 or other laser beam-splitting element and focusing lens are moved in the X and Y directions, the plurality of spots S can be moved relative to the wafer 102.

Further, the plurality of spots S were rotated by rotating the diffraction grating 105; but the stage 103 can be rotated instead.

The invention can further include the following.

### Supplemental Item 1

A laser machining apparatus of this invention, wherein, after the laser beam-splitting element has split the pulsed laser light into a plurality of beams in horizontal directions, the focal positions of the plurality of beams are each relatively shifted in the optical axis direction, and the focusing optical system focuses the plurality of beams as a plurality of spots, aligned in a horizontal direction and in a direction perpendicular to the horizontal direction, on the surface of or within the workpiece.

In this laser machining apparatus, light can be focused at a plurality of spots aligned in a horizontal direction and in the depth direction (thickness direction) of the workpiece, so that even a workpiece which is thick can easily be cut.

In the above, preferred embodiments of the invention have been explained; but the invention is not limited to the above embodiments. Various additions, omissions, substitutions, and other modifications can be made, within the range in which there is no deviation from the gist of the invention. The invention is not limited by the above-described explanations, but is limited only by the attached scope of claims.

### INDUSTRIAL APPLICABILITY

This invention relates to a laser machining apparatus provided with a stage on which the workpiece is placed; emission device for emitting laser light toward the surface of the workpiece, an optical system for splitting the laser light into a plurality of beams and for focusing the beams as a plurality of spots on the surface of or within the workpiece; and, movement device for moving the plurality of spots in a horizontal direction relative to the workpiece.

By means of a laser machining apparatus of this invention, the cleanness of cutting can be improved and cutting properties can be enhanced, and in addition thick samples can easily be cut. Further, laser machining can be performed rapidly, and throughput can be improved, without altering the repetition frequency of the laser light or the maximum machining interval between cracks.

## Claims

1. A laser machining apparatus, comprising:
a stage on which a workpiece is placed;
an emission device for emitting laser light toward a surface of the workpiece;
an optical system for splitting the laser light into a plurality of beams, and for focusing the beams as a plurality of spots on the surface of or within the workpiece; and,
a movement device for moving the plurality of spots in a horizontal direction relative to the workpiece.

2. The laser machining apparatus according to claim 1, wherein the optical system is a focusing optical system, having a birefringent optical axis-direction beam-splitting element, which splits the laser light into a plurality of beams, and which focuses the beams in the plurality of spots, aligned along a direction perpendicular to the surface of the workpiece.

3. The laser machining apparatus according to claim 2, wherein the focusing optical system has a birefringent horizontal-direction beam-splitting element, which shifts positions of the plurality of adjacent spots relatively in a horizontal direction.

4. The laser machining apparatus according to claim 2, further comprising an observation optical system to observe the surface of the workpiece, and wherein the movement device can move the plurality of spots in a direction perpendicular to the surface relative to the workpiece, and during this movement, the focus on the surface of the workpiece is automatically adjusted based on data observed by means of the observation optical system.

5. The laser machining apparatus according to claim 1, wherein the laser light is pulsed laser light, and the optical system comprises a laser beam-splitting element, which splits the laser light into a plurality of beams, and a focusing optical system, which focuses the plurality of beams as a plurality of spots, aligned in a horizontal direction on the surface of or within the workpiece.

6. The laser machining apparatus according to claim 5, wherein the laser beam-splitting element splits the laser light so as to be expanded in a plane, and the focusing optical system focuses light at the plurality of spots so as to be aligned in a straight line in a horizontal direction.

7. The laser machining apparatus according to claim 5, wherein the laser beam-splitting element splits the laser light so as to expand in perpendicular planes, and the focusing optical system focuses the light at the plurality of spots so as to be aligned in two dimensions relative to the horizontal plane.

8. The laser machining apparatus according to claim 5, further comprising a rotation device which rotates the plurality of spots about the axis perpendicular to the surface of the workpiece.

9. The laser machining apparatus according to claim 5, wherein the laser light is incident on the laser beam-splitting element in a parallel-beam state, and the laser beam-splitting element is an angle-resolving beam-splitting element which splits the laser light into a plurality of beams at different angles to obtain the plurality of beams.

10. The laser machining apparatus according to claim 5, wherein the angle-resolving beam-splitting element is a diffraction grating, the splitting plane of which is positioned at the pupil position of the focusing optical system or at a position optically conjugate with the pupil position.

11. The laser machining apparatus according to claim 5, wherein the angle-resolving beam-splitting element is a Nomarski prism, and the localization plane is positioned at the pupil position of the focusing optical system or at the position which is optically conjugate with the pupil position.

12. The laser machining apparatus according to claim 5, wherein the angle-resolving beam-splitting element comprises a mirror prism.

13. The laser machining apparatus according to claim 5, wherein the laser light is incident on the laser beam-splitting element in a non-parallel beam state, and the laser beam-splitting element is a parallel-displacement beam-splitting element, which splits the laser light into a plurality of beams displaced parallel to the optical axis, to obtain the plurality of beams.

14. The laser machining apparatus according to claim 13, wherein the parallel-displacement beam-splitting element is a birefringent optical element having birefringence.

15. The laser machining apparatus according to claim 13, wherein the parallel-displacement beam-splitting element comprises a mirror prism.
